(19)

Europäisches
Patentamt
European
Patent Office
Office européen
des brevets

(11)  **EP 1 876 729 A1**

(12)  **EUROPEAN PATENT APPLICATION**

(43) Date of publication:
**09.01.2008 Bulletin 2008/02**

(51) Int Cl.:
*H04B 7/26* (2006.01)

(21) Application number: **06116631.0**

(22) Date of filing: **05.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Koninklijke Philips Electronics N.V.**
**5621 BA  Eindhoven (NL)**

(72) Inventor: **The designation of the inventor has not yet been filed**

(74) Representative: **van der Veer, Johannis Leendert et al**
**Philips**
**Intellectual Property & Standards**
**P.O. Box 220**
**5600 AE  Eindhoven (NL)**

(54)  **Bandwidth asymmetric communication system**

(57)  The present invention relates to a bandwidth asymmetric communication system comprising at least one terminal having an uplink transmission unit (1) for transmitting radio frequency OFDM signals at a radio frequency and an access point having an uplink receiving unit (4) for receiving said radio frequency OFDM signals, said OFDM signals being Orthogonal Frequency Division Multiplex (OFDM) modulated. To reduce the implementation complexity and synchronization requirements a communication system is proposed in which the bandwidth of said uplink transmission unit and of the transmitted radio frequency OFDM signals is smaller than the bandwidth of said uplink receiving unit. Further, a communication system is proposed in which the bandwidth of a downlink transmission unit (7) of the access point is larger than the bandwidth of a downlink receiving unit (11) of the at least one terminal and in which the downlink transmission unit is adapted to generate and transmit radio frequency OFDM signals having a bandwidth that is smaller than the bandwidth of the downlink transmission unit and that is equal to the bandwidth of the downlink receiving unit. Still further, the present invention relates to a communication method, to a terminal and to an access point for use in such a communication system.

FIG.1

**Description**

FIELD OF THE INVENTION

The present invention relates to a communication system comprising at least one terminal having an uplink transmission unit for transmitting radio frequency OFDM signals at a radio frequency and an access point having an uplink receiving unit for receiving said radio frequency OFDM signals, said OFDM signals being Orthogonal Frequency Division Multiplex (OFDM) modulated. Further, the present invention relates to a corresponding communication method and to a terminal and an access point for use in such a communication system.

BACKGROUND OF THE INVENTION

All wireless communication systems known so far require both the access point (base station in a mobile telecommunication system) and the terminal (mobile station/terminal in a mobile telecommunication system) to operate at the same bandwidth. This has an economically negative consequence that a high-speed air interface cannot be cost- and power-consumption effectively used by low power and low cost terminals. Because of this traditional design, different air interfaces have to be used for different power and cost classes of terminals in order to cope with the different bandwidth, power consumption, bit rate and cost requirements. For example, Zigbee is used for very low power, low cost and low speed devices, such as wireless sensor, Bluetooth for wireless personal area network (WPAN) applications, and 802.1 lb/g/a for wireless local area network (WLAN) applications.

Orthogonal frequency division multiplexing (OFDM) systems are traditionally based on an Inverse Discrete Fourier Transform (IDFT) in the transmitter and a Discrete Fourier Transform (DFT) in the receiver, where the size of IDFT and DFT are the same. This means that if the access point (AP) is using a N-point DFT/IDFT (i.e. OFDM with N sub-carriers), the mobile terminal (MT) also has to use a N-point DFT/IDFT. Even in a multi-rate system, where the data-modulated sub-carriers are dynamically assigned to a MT according to the instant data rate of the application, the size of the MT-side DFT/IDFT is still fixed to the size of the AP-side IDFT/DFT. This has the consequence that the RF front-end bandwidth, the ADC/DAC (analog-digital-converter / digital-analog-converter) and baseband sampling rate are always the same for the AP and MT, even if the MT has much less user data to send per time unit. This makes it impossible in practice that a high-throughput AP / base station supports very low power, low cost and small-sized devices.

SUMMARY OF THE INVENTION

It is an object of the present invention to provide a communication system, a corresponding communication method and a terminal and an access point for use therein by which the implementation complexity can be reduced.

The object is achieved according to the present invention by a communication system as claimed in claim 1 which is characterized in that the bandwidth of said uplink transmission unit and of the transmitted radio frequency OFDM signals is smaller than the bandwidth of said uplink receiving unit and by a communication system as claimed in claim 2 which is characterized in that the bandwidth of said downlink transmission unit is larger than the bandwidth of said downlink receiving unit and that the downlink transmission unit is adapted to generate and transmit radio frequency OFDM signals having a bandwidth that is smaller than the bandwidth of the downlink transmission unit and that is equal to the bandwidth of the downlink receiving unit.

A terminal, an access point and a communication method according to the present invention are defined in claims 6 to 30. Preferred embodiments of the terminal and the access point are defined in the dependent claims. It shall be understood that the communication system and method can be developed in the same or similar way as defined in the dependent claims of the terminal and the access point.

A paradigm shift is made in the proposed communication system design compared to known communication system designs. By exploiting a special property of OFDM and combining OFDM with other techniques it is made possible for the first time that a high bandwidth access point (base station) can support different bandwidth classes of (mobile) terminals. For example, a 1 Gbps @ 100 MHz access point of 1000 US$ can communicate with a 500 Mbps @ 50 MHz multimedia device of 200 US$ and with a 64 kpbs@10 kHz wireless sensor of 1 US$ in parallel.

Unlike the traditional OFDM systems design, where the AP and MT use the same bandwidth for the uplink transmission unit and the uplink receiving unit, in particular the same size of DFT/IDFT in said units, the new design proposed according to the present invention allows the MT to have the same or a smaller bandwidth than the AP, in particular to use the same or a smaller size of DFT/IDFT than the AP. Similarly, for downlink, the present invention allows the AP to communicate with MTs having the same or smaller bandwidth than the AP, in particular having the same or a smaller size of DFT/IDFT than the AP.

To explain this it shall first be recalled that a N-point DFT generates a discrete spectrum between the sub-carriers $-N/(2\,T_s)$ and $N/(2\,T_s)-1$, where $T_s$ is the OFDM symbol rate and N the size of DFT/IDFT. The positive most-frequent sub-carrier N/(2T$_s$) is not included, for DFT represents a periodic spectrum. However, through investigations on the exploitation of a new property of DFT/IDFT to create a disruptive new OFDM system a new property of DFT/IDFT has been found, which is now summarized by the following two Lemmas.

Lemma 1: Let X$_{tx}$(k) and X$_{rx}$(k) denote the DFT spectral coefficients of the transmitter and receiver, respectively, where the transmitter uses a N$_{tx}$ point IDFT at sampling rate F$_{tx}$ to generate an OFDM signal x(t) of bandwidth F$_{tx}$/2, and the receiver uses N$_{rx}$ point DFT at sampling rate F$_{rx}$ to demodulate the received signal x(t). It holds X$_{rx}$(k) = L X$_{tx}$(k) for 0≤k≤.N$_{tx}$-1, and X$_{rx}$(k) = 0 for N$_{tx}$≤k≤N$_{rx}$-1, if N$_{tx}$=F$_{tx}$/f$_\Delta$=2$^t$, N$_{rx}$=F$_{rx}$/f$_\Delta$=2$^r$, r>t, and L= N$_{rx/}$ N$_{tx≥1}$, where f$_\Delta$ is the sub-carrier spacing, which is set same for both the transmitter and receiver. Here, Lemma 1 is the theoretical foundation for uplink bandwidth asymmetry.

Lemma 2: Let X$_{tx}$(k) and X$_{rx}$(k) denote the DFT spectral coefficients of the transmitter and receiver, respectively, where the transmitter uses a N$_{tx}$ point IDFT at sampling rate F$_{tx}$ to generate an OFDM signal x(t) of bandwidth F$_{rx}$/2, and the receiver uses N$_{rx}$ point DFT at sampling rate F$_{rx}$ to demodulate the received signal x(t). It holds X$_{rx}$(k) = X$_{tx}$(k) / L for 0≤k≤.N$_{rx}$-1, if N$_{tx}$=F$_{tx}$/f$_\Delta$=2$^t$, N$_{rx}$=F$_{rx}$/f$_\Delta$=2$^r$, t>r, and L= N$_{tx/}$ N$_{rx≥1}$, where f$_\Delta$ is the sub-carrier spacing, which is set same for both the transmitter and receiver. Here, Lemma 2 is the theoretical foundation for downlink bandwidth asymmetry.

With Lemma 1 a new type of OFDM systems can now be created, whose AP uses a single N$_{rx}$-point DFT or FFT to demodulate OFDM signals of different bandwidths that were OFDM-modulated in different MTs with N$_{tx\_i}$ point IDFTs or IFFTs, where i is the index of the MTs. The only preferred constraint is that the sub-carrier spacing f$_\Delta$ is the same for both AP and MT, and N$_{tx\_i}$=2$^{t\_i}$, N$_{rx}$=2$^r$, r≥t\_i.

With Lemma 2 a new type of OFDM systems can now be created, whose AP can use a single N$_{tx}$-point IDFT or IFFT to modulate OFDM signals of different bandwidths. These signals will be demodulated by MTs of different bandwidths by using N$_{rx\_i}$ point DFT or FFT, where i is the index of the MTs. The only preferred constraint is that the sub-carrier spacing f$_\Delta$ is the same for both AP and MT, and N$_{tx}$=2$^t$, N$_{rx\_i}$=2$^{r\_i}$, t≥r\_i.

Note, for simplicity of proofs the conventional DFT indexing rule for the above Lemmas 1 and 2 is not use, it is rather assumed that the index k runs from the most negative frequency (k=0) to the most positive frequency (k=N$_{tx}$ or N$_{rx}$). However, in the following description, the conventional DFT indexing rule is assumed again.

A smaller DFT size, in general a smaller bandwidth, means lower baseband and RF front-end bandwidth, which in turn means lower baseband complexity, lower power consumption and smaller terminal size. For the extreme case, the MT only uses the two lowest-frequent sub-carriers f$_o$ and f$_1$ of the AP, thus can be of very low power and cheap. The bandwidth asymmetric communication system is thus based on a new OFDM system design which results in low implementation complexity in the access point, in particular by sharing one DFT or FFT operation for all multi-bandwidth terminals.

Preferred embodiments of the invention are defined in the dependent claims. Claims 3 and 27 define embodiments of the communication system regarding the bandwidths, symbol length and guard intervals. Claims 9 to 11 define embodiments of the uplink transmission unit of the terminal, claims 17 to 21 define embodiments of the uplink receiving unit of the access point, claims 12 to 15 and 22 to 26 define corresponding embodiments for the downlink transmission unit and the downlink receiving unit.

The performance of the new system can be improved, if the access point sends or receives preambles regularly or on demand to/from the different mobile terminals as proposed according to an advantageous embodiment claimed in claims 4 and 5. In this embodiment a general downlink and uplink preamble design requirement is introduced and a set of specific preamble sequences meeting this requirement for MTs of different bandwidths is proposed.

When the bandwidth asymmetric OFDM system proposed according to the present invention will be introduced in practice (e.g. for the 5 GHz band), it has to coexist with possibly existing known legacy OFDM systems used already in practice at the same band (e.g. the IEEE802.11a and IEEE802.11n systems).Furthermore, there may be a strong requirement that the AP can support user stations of both the new OFDM system and the already existing legacy system. Hence, further embodiments of the access point according to the present invention are proposed in claims 28 to 30 which will enable that the AP can operate either alternatively in one of the system modes, or operate concurrently in both system modes, even in the same frequency band. Preferably, the functional blocks of the transmitter and receiver architecture as defined above are reused by the AP to support the user stations (MTs) of the legacy OFDM system, in addition to the user stations of the new bandwidth asymmetric OFDM system.

BRIEF DESCRIPTION OF THE DRAWINGS

The invention will now be explained in more detail with reference to the drawings in which:

Fig. 1 shows a block diagram of a transmitter architecture for uplink,
Figs. 2 and 3 illustrate the signal flow in the transmitter for uplink,
Fig. 4 shows a block diagram of a receiver architecture for uplink,

Figs. 5 and 6 illustrate the signal flow in the receiver for uplink,

Fig. 7 shows a block diagram of a transmitter architecture for downlink,

Figs. 8 to 10 illustrate the signal flow in the transmitter for downlink,

Fig. 11 shows a block diagram of a receiver architecture for downlink,

Fig. 12 illustrates the signal flow in the receiver for downlink,

Fig. 13 illustrates how the different bandwidth classes share the different spectral coefficients,

Fig. 14 shows an example of the preamble design, starting with a Gold sequence for the largest bandwidth class with 12 samples,

Fig. 15 shows a block diagram of an embodiment of a transmitter architecture for uplink with preamble insertion,

Fig. 16 shows a block diagram of an embodiment of a transmitter architecture for downlink with preamble insertion,

Fig. 17 shows a block diagram of an embodiment of a receiver architecture for uplink enabling alternating use with existing communication systems,

Fig. 18 shows a block diagram of an embodiment of a transmitter architecture for downlink enabling alternating use with existing communication systems,

Fig. 19 shows a block diagram of an embodiment of a receiver architecture for uplink enabling concurrent use with existing communication systems, and

Fig. 20 shows a simple block diagram of a communications system in which the present invention can be used.


DETAILED DESCRIPTION OF EMBODIMENTS

General layout for uplink transmitter

It is known that uplink synchronization is very challenging for any OFDM system. With bandwidth asymmetric OFDM this problem would be even worse, because the miss-match between the sampling rates and low-pass filters in the access point and different terminals would further increase the degree of out of sync in a practical implementation. In an OFDM system the term synchronization covers clock, frequency, phase and timing synchronization. In general, both OFDM symbol and frame synchronization shall be taken into account when referring to timing synchronization. By the means of an innovative combination of techniques, as will become apparent from the below described embodiments, the communication system according to the invention is made robust to practical jitters in frequency, phase, clock, and timing. Conventional MC-CDMA systems do spreading across sub-carriers, which requires excellent frequency, clock and timing synchronization and very small Doppler shift to maintain the orthogonality between the spreading codes. Though it is known that ICI would not violate orthogonality between spreading codes, if the spreading is not done across sub-carriers, rather along each sub-carrier, the timing synchronization between the channel encoded symbols from different terminals is, in general, still required in the AP to assure orthogonality between the spreading codes from different terminals.

Generally, the invention relates to a communication system including at least one access point, such as a base station in a telecommunications network, and at least one terminal, such as at least one mobile phone in a telecommunications network. While generally the terminals associated with the access point(s) in known communication systems necessarily need to have identical bandwidths in order to be able to communicate with each other, this is not required in the system according to the present invention. Let the k-th bandwidth class of terminals be defined as the class of terminals, whose FFT/IFFT has only $2^k$ coefficients and whose baseband sampling rate is $2^k f_\Delta$, $f_\Delta$ being the sub-carrier distance , then it holds for uplink L= $N_{rx}$ / $N_{tx} \geq 1$ with $N_{tx}=2^k$.

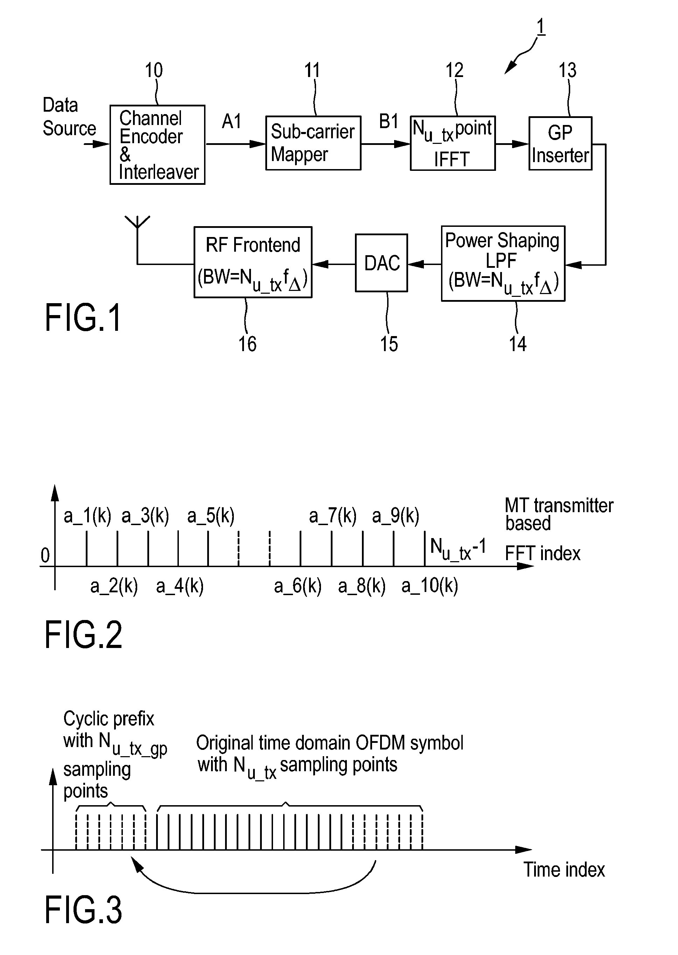

Fig. 1 shows a block diagram of a transmitter architecture for uplink, i.e. the schematic layout of the uplink transmission unit 1 of a user terminal (MT) of a specific bandwidth class according to the present invention for use in a basic asymmetric OFDM communication system. Upon reception of application data, a channel encoder and interleaver 10 (generally called uplink symbol generation means) generate complex (I/Q) valued channel encoded data. It shall be noted that real-valued symbols are regarded here as a special case of complex valued data symbols with the imaginary Q-component being zero. A sub-carrier mapper 11 gets m channel encoded data symbols from the channel encoder and interleaver 10, where m is smaller than or equal to $N_{u\_tx}$, which is the size of the bandwidth class specific IFFT of the terminal.

A1 denotes the input vector to the sub-carrier mapper 11, which contains m symbols as its components. The terminal may agree with the access unit (not shown) on a common pseudo-random sequence to change the mapping of the m data symbols of A1 onto m out of $N_{u\_tx}$ sub-carriers of IFFT. As a trade-off between diversity gain and computing demand, the change of sub-carrier mapping is not done OFDM symbol by OFDM symbol, rather time slot by time slot. Within each time slot the same m out of $N_{u\_tx}$ sub-carriers are used for each input vector A1.

Like in conventional OFDM systems, it is required that a small fractional of the total $N_{u\_tx}$ sub-carriers, which sit around the $N_{u-tx}/2$-th coefficient of the IFFT and represent the highest-frequent sub-carriers in the OFDM symbol, are not used for the communication. This is because the power-shaping filter in the time domain will result in an extension of the modulated signal spectrum and would introduce ICI, if this measure were not taken. Furthermore, the DC sub-carrier is often not transmitted, too. The FFT coefficients for these unused sub-carriers are thus set to zero.

The so constructed $N_{u\_tx}$ FFT coefficients are the output B1 of the sub-carrier mapper 11, which undergoes an $N_{u\_tx}$-point IFFT in IFFT unit 12 to generate an OFDM symbol of maximum bandwidth $N_{u\_tx} f_\Delta$. Optionally, a pre-equalization can be executed before the IFFT by exploiting the downlink channel estimates because of the reciprocity of the channel (e.g. a TDD channel).

A guard period (GP) is inserted in a guard period insertion unit 13 after the IFFT by a fractional cyclic extension of the OFDM symbol. To achieve a unified OFDM demodulation architecture for all different terminal bandwidth classes the guard period is preferably the same for all terminals.

The GP insertion unit 13 is followed by a power-shaping filter 14 to limit the out-of-band transmission power, and by a conventional digital-analog-converter (DAC) 15 and RF front-end (RF transmission unit) 16, which are optimized for bandwidth $N_{u\_tx} f_\Delta$.

The channel encoder and interleaver 10 and the sub-carrier mapper 11 are generally also called OFDM coding means, and the OFDM coding means and the IFFT unit 12 are generally also called OFDM modulation means.

To illustrate signal flows in the above described scheme an output data sequence at channel encoder and interleaver 10 shall be assumed to be A(1), A(2), A(3), A(4), A(5), ..., where $A(k)=(a\_1(k), a\_2(k), ...a\_m(k))^T$ is a vector with m complex components. The real and the imaginary parts of each component $a\_i(k)$ represent the I- and Q-components of the channel encoded data symbol, respectively. The sequence A(k) is preferably stored in an output FIFO queue of the channel encoder and interleaver 10, and will be read out by the sub-carrier mapper 11 on demand.

For each output vector A(k) of the channel encoder and interleaver 10, the sub-carrier mapper 11 maps its m components $a\_i(k)$, i=1,..m, onto m out of $N_{u\_tx}$ sub-carriers of the transmitter in the considered terminal. The DC sub-carrier and some highest-frequent sub-carriers with positive and negative sign may not be used. A possible mapping in sub-carrier mapper 11 for m=10 is illustrated in Fig. 2.

Each so constructed output data symbol B(k) is an OFDM symbol in the frequency domain. The $N_{u\_tx}$-point IFFT transformer 12 transforms the OFDM symbol in the frequency domain into an OFDM symbol in the time domain. The GP inserter 14 adds a cyclic prefix taken from the last $N_{u\_tx\_gp}$ samples of the time domain OFDM symbol or $N_{u\_tx\_gp}$ zero-valued samples to the time domain OFDM symbol. Fig. 3 illustrates the adding of a cyclic prefix to the time domain OFDM symbol.

The so constructed OFDM symbol with guard period undergoes a digital low-pass filtering for power shaping. This power-shaping LPF 14 may or may not be sampled at a higher sampling rate than the sampling rate of the time domain OFDM symbol.

General layout for uplink receiver

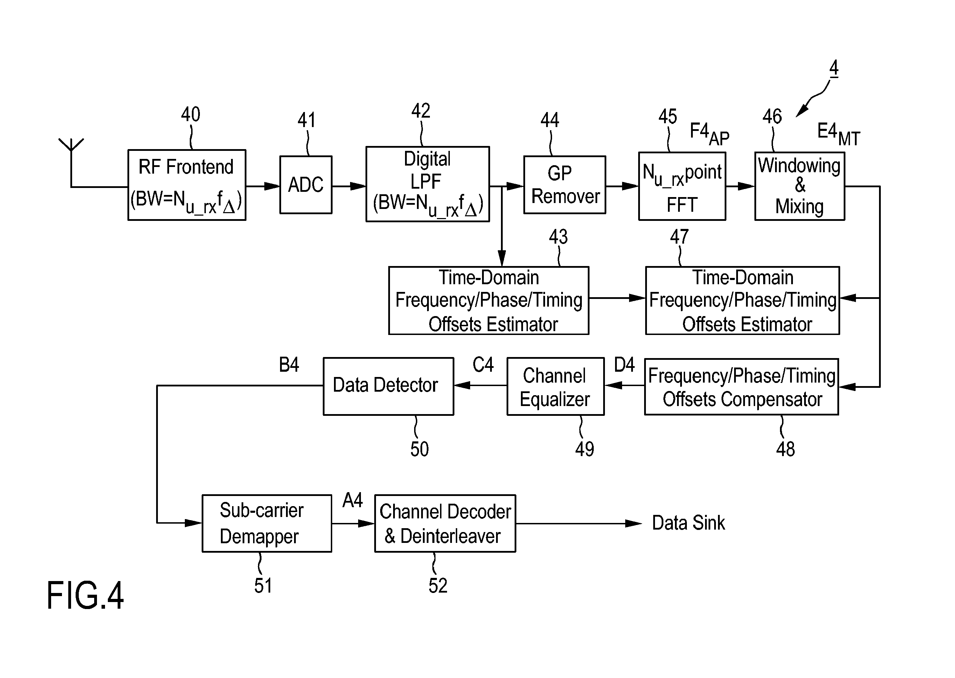

Fig. 4 shows a block diagram of a receiver architecture for uplink, i.e. the schematic layout of the uplink receiving unit 4 of an access point (AP) according to the present invention for use in a basic asymmetric OFDM communication system. A conventional RF front-end 40 and analog-digital-converter (ADC) 41, which are dimensioned for the maximum bandwidth of $N_{u\_rx} f_\Delta$, receive independently of the bandwidth classes of the terminals the RF OFDM signals from a terminal of a specific bandwidth class. For the embodiment shown here it is assumed that different terminals of the same or different bandwidths cannot communicate with the access point simultaneously without collision.

The ADC 41 may do over-sampling to support the following digital low-pass filter (LPF) 22, whose edge frequency is dimensioned for the maximum bandwidth of $N_{u\_rx} f_\Delta$, rather than for the terminal specific bandwidth of $N_{u\_tx} f_\Delta$. The digital LPF 42 in the time domain is common for all bandwidth classes. If the ADC 41 is doing over-sampling to support the digital LPF 42, the digital LPF will do the reverse down-sampling to restore the required common (maximum) receiver sampling rate of $N_{u\_rx} f_\Delta$.

After the digital LPF 42, the correct OFDM symbol including the GP block will be extracted from the incoming bit stream, i.e. the baseband OFDM signal, under the assumption of symbol time synchronization. A terminal-specific time-domain frequency/phase/timing offsets estimator 43 performs the frequency, phase, and timing acquisition and tracking based on the special bit pattern in the preamble. The time-domain frequency/phase/timing offsets estimator 43 could be removed, if a quasi-synchronization between the transmitter and receiver is maintained by other means.

After time-domain frequency/phase/timing offsets estimator 43 the guard period is removed by a GP remover 44, and the remaining $N_{u\_rx}$ samples undergo a bandwidth class independent FFT with an $N_{u\_rx}$ point FFT unit 45 to obtain a frequency domain OFDM signal.

After the bandwidth class independent FFT, bandwidth class and terminal specific operations are carried out. Firstly, the terminal specific sub-carriers are extracted from the $N_{u\_rx}$ FFT coefficients, what is done in a windowing & mixing unit 46 (generally called uplink reconstruction unit). If the power shaping filter 14 in the transmitter 1 is ideal, which would guarantee ISI-free (Inter-Symbol-Interference) reception at the receiver 4, the first $N_{u\_tx}/2$ coefficients of an $N_{u\_rx}$-point FFT would exactly represent the $N_{u\_tx}/2$ least-frequent sub-carriers with positive sign (including the DC) and the last $N_{u\_tx}/2$ coefficients of an $N_{u\_rx}$-point FFT would represent the $N_{u\_tx}/2$ least-frequent sub-carriers with negative sign in the OFDM signal. This would mean that the following windowing operation alone could extract $N_{u\_tx}$ sub-carriers out of the entire $N_{u\_rx}$ FFT coefficients for the considered bandwidth class (MT meaning terminal and AP meaning access point):

$$E4_{MT}(i) = F4_{AP}(i), \qquad\qquad \text{if } 0 \leq i \leq N_{u\_tx}/2 - 1$$

$$E4_{MT}(i) = F4_{AP}(N_{u\_rx} - N_{u\_tx} + i), \qquad\qquad \text{if } N_{u\_tx}/2 \leq i \leq N_{u\_tx} - 1$$

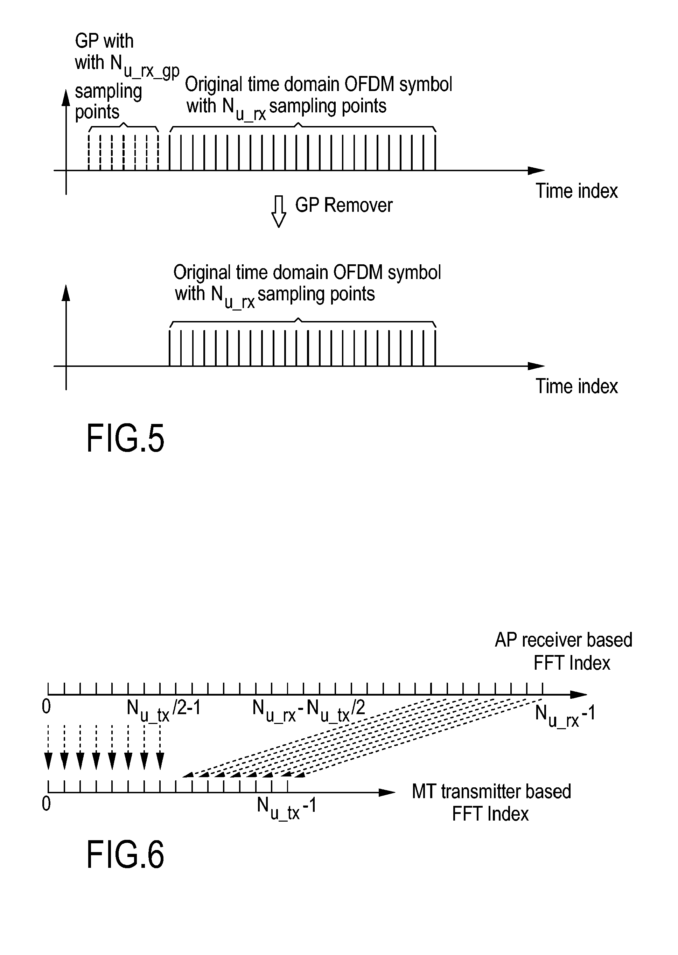

This mapping is illustrated in Fig. 6.

Above, $F4_{AP}(i)$ denotes the i-th FFT coefficient obtained in the access point after the $N_{u\_rx}$ point FFT, and $E4_{MT}(i)$ denotes the i-th FFT coefficient that were generated in the terminal of the considered bandwidth class.

However, in a practical system the power-shaping filter 14 (see Fig. 1) in the transmitter is not ideal. Usually, a (Root Raised Co-Sine) RRC or RC (Raised CoSine) filter is applied, which will extend the original OFDM spectrum of the used sub-carriers to adjacent bands, which will result in spreading of received useful signal energy to other sub-carriers than the first $N_{u\_tx}/2$ and last $N_{u\_tx}/2$ sub-carriers in Fig. 6. Therefore, in general, a windowing and mixing operation needs to be applied instead of the above simple windowing operation for the discussed ideal case.

Hence, the bandwidth class specific windowing & mixing unit 26 in a preferred embodiment selects K/2 first and K/2 last FFT coefficients out of the $N_{u\_rx}$ FFT coefficients $F4_{AP}$ from the $N_{u\_rx}$-point FFT unit 45 in Fig. 4, where $N_{u\_tx} \leq K \leq N_{u\_rx}$. The i-th FFT coefficient $E4_{MT}(i)$ of the transmitted OFDM symbol from the considered terminal is reconstructed by a linear or non-linear filter operation on these K FFT coefficients in the receiver. In general, this operation can be expressed as

$$E4_{MT}(i) = \text{function}(F4_{AP}(m), F4_{AP}(n)),$$

for all m, n with $0 \leq m \leq K/2 - 1$, $N_{u\_rx} - K/2 \leq n \leq N_{u\_rx} - 1$.

If the terminal sends preambles and/or pilot tones, a terminal-specific frequency-domain frequency/phase/timing offsets estimator 47 is provided for executing another frequency/phase/timing offsets estimation in the frequency domain. The frequency-domain frequency/phase/timing offsets estimator 47 also utilizes the results from the time-domain frequency/phase/timing offsets estimator 43 to increase the precision and confidence of the estimation. Further, a frequency/phase/timing offsets compensator 48 is provided which exploits the final frequency/phase/timing estimation results for the considered terminal to compensate for the offsets on the modulated sub-carriers in $E4_{MT}(i)$. Furthermore, the access point may feed back the final frequency/phase/timing estimation results to the terminal via the control information conveyed in a downlink channel.

A terminal-specific channel equalization is executed in a channel equalizer 49 on the output vector D4 of the frequency/phase/timing offsets compensator 48, because its result is more reliable on D4, rather than $E4_{MT}(i)$, after the frequency/phase/timing offsets are cleaned up. The channel equalizer 49 delivers an output vector C4, which contains all possible sub-carriers of the terminal. Because the data C4 after the channel equalizer 49 are still affected by noise and interferences, in general, a terminal-specific data detector 50 (e.g. MLSE) can be applied to statistically optimize the demodulation result for each used sub-carrier. The statistically optimized detection result B4 is delivered to the sub-carrier demapper 51, which reconstructs the m data symbols (i.e. complex valued channel encoded symbols) as the components of A4 for the considered terminal. Finally, the data symbols are de-interleaved and channel-decoded in a channel decoder and deinterleaver 52 to obtain the original upper layer data signal.

The reconstruction unit 46, the sub-carrier demapper 51 and the channel decoder and deinterleaver 52 are generally also called uplink OFDM decoding means, and the FFT unit 55 and the OFDM decoding means are generally also called uplink OFDM demodulation means.

Next, signal flows in the above described scheme shall be explained. Because in the access point the receiver 40 has a higher bandwidth and the baseband a higher sampling rate than the transmitter in the terminal, the received time domain OFDM symbol with guard period will contain $N_{u\_rx} + N_{u\_rx\_gp}$ sampling points, with $N_{u\_rx}/N_{u\_tx} = N_{u\_rx\_gp}/N_{u\_tx\_gp} = 2^k$, in general. However, the absolute time duration of the time domain OFDM symbol and its guard period is the same as that generated by the transmitter in the terminal, because the receiver is sampled at a 2k times higher rate.

The GP remover 44 removes the Nu_rx_gp preceding samples from each time domain OFDM symbol with guard interval, as is illustrated in Fig. 5.

The $N_{u\_rx}$-point FFT transformer 45 transforms the time domain OFDM symbol without guard period to an OFDM symbol in the frequency domain. The original $N_{u\_tx}$ OFDM sub-carriers transmitted by the terminal are reconstructed by taking the first $N_{u\_tx}/2$ samples and the last $N_{u\_tx}/2$ samples out of the $N_{u\_rx}$ spectral coefficients of the $N_{u\_rx}$-point FFT, as is illustrated in Fig. 6, or by a more sophisticated frequency domain filtering operation.

The so re-constructed MT transmitter FFT window based OFDM symbol undergoes first processing in frequency/phase/timing offset compensation, channel equalization and data detection. Then, the sub-carrier demapper 51 maps the m reconstructed data sub-carriers of each frequency domain OFDM symbol B(k) to m channel encoded data symbols a_1(k), a_2(k), ... a_m(k) for further processing by the channel decoder and deinterleaver 52.

General layout for downlink transmitter

Next, embodiments of the transmitter and receiver architecture for downlink shall be explained. Let the k-th bandwidth class of terminals be defined as the class of terminals, whose FFT/IFFT has only $N_{d\_rx}=2^k$ coefficients, and whose baseband sampling rate is $N_{d\_rx} f_\Delta$. Let the OFDM sampling rate in the access point be $N_{d\_tx} f_\Delta$, where $N_{d\_tx}$ is the size of the FFT engine for the OFDM modulation, then it holds for downlink L= $N_{d\_tx} / N_{d\_rx} \geq 1$.

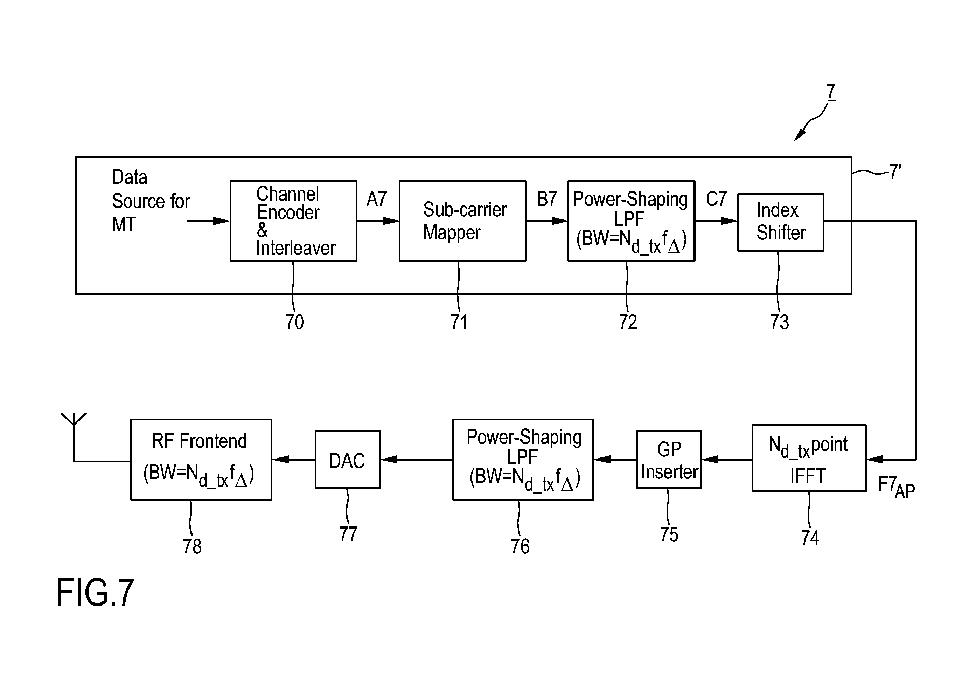

Fig. 7 shows a block diagram of a transmitter architecture for downlink, i.e. the schematic layout of the downlink transmission unit 7 of an access point according to the present invention for use in a basic asymmetric OFDM communication system, which resembles much the uplink transmitter block diagram shown in Fig. 1. Block 7' of Fig. 7 contains terminal (thus bandwidth)-specific operations only.

The first two blocks channel encoder and interleaver 70 (generally called downlink symbol generation means) and sub-carrier mapper 71 are the same as the corresponding blocks 10 and 11 in Fig. 1. For each receiving terminal of a specific bandwidth $N_{d\_rx} f_\Delta$, the sub-carrier mapper maps the m channel encoded (complex valued OFDM) data symbols A7 from the channel encoder and interleaver 70 onto a maximum of $\alpha N_{d\_rx}$ OFDM sub-carriers to obtain a frequency domain OFDM source signal B7, where $0<\alpha<1$ reflects the fact that a small fraction of the highest-frequent sub-carriers with both positive and negative signs, and possibly also the DC sub-carrier, should not be used to avoid ICI caused by a possible non-linearity in the transmitter and/or receiver.

In addition, an optional bandwidth class specific power-shaping filtering in a LPF unit 72 and pre-equalization operation can be applied in the FFT spectral domain on the output B7 of the sub-carrier mapper 71 to further improve the spectral property of the transmitted bandwidth specific OFDM signals for the estimated channel to the considered terminal to obtain output C7.

Because the conventional FFT-coefficient indexing rule for an $N_{d\_tx}$-point FFT is used for all terminals independent of their bandwidths in Fig. 7, the bandwidth specific FFT indices resulted from the terminal specific sub-carrier mapper unit 71 need to re-ordered, in general, to meet the frequency correspondence in the enlarged FFT window for the common IFFT for all bandwidth classes. Therefore, the sub-carrier reordering process as performed by unit 46 of Fig. 4 and as shown in Fig. 6 is performed by an index shifter 73 (generally also called construction unit), but in a reverse direction compared to the reconstruction process explained above for uplink transmission.

After this reordering process, an $N_{d\_tx}$ dimensional FFT vector is generated in an IFFT unit 74 for the considered terminal, which only contains at most the first $N_{d\_rx}/2$ and the last $N_{d\_rx}/2$ non-zero spectral coefficients to be received by the terminal. The FFT coefficients sitting in-between are generally set to zero in this embodiment.

The operations after the index shifter 73 are bandwidth class independent. All these common units 74 to 78 in Fig. 7 are just dimensioned in a conventional way for the $N_{d\_tx}$-point IFFT, which corresponds to the maximum system bandwidth of $N_{d\_tx} f_\Delta$.

The channel encoder and interleaver 70, the sub-carrier mapper 71 and the index shifter 73 are generally also called downlink OFDM coding means, and the downlink OFDM coding means and the IFFT unit 74 are generally also called OFDM modulation means.

Similar to Fig. 1, to illustrate the signal flows in the scheme of Fig. 7, the output data sequence at the channel encoder and interleaver 70 shall be assumed to be A(1), A(2), A(3), A(4), A(5), ..., where A(k)=(a_1(k), a_2(k), ...a_m (k))$^T$ is a vector with m complex components. The real and the imaginary parts of each component a_i(k) represent the I- and Q-components of the channel encoded data symbol, respectively. The sequence A(k) is preferably stored in an output FIFO queue of the channel encoder and interleaver 70, and will be read out by the sub-carrier mapper 71 on demand.

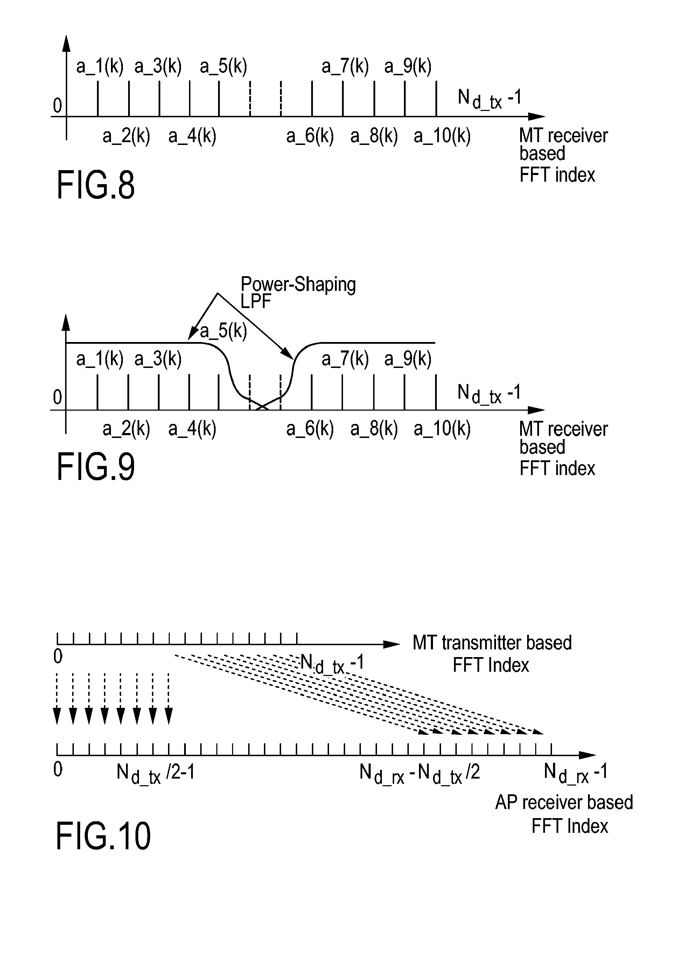

For each output vector A(k) of the channel encoder and interleaver 70, the sub-carrier mapper 71 maps its m components a_i(k), i=1,..m, onto m out of $N_{d\_rx}$ sub-carriers of the considered MT receiver. The DC sub-carrier and some highest-frequent sub-carriers with positive and negative sign may not be used. A possible mapping in sub-carrier mapper 71 for m=10 is illustrated in Fig. 8.

Each so constructed output data symbol of the sub-carrier mapper 71 is a frequency domain OFDM symbol with respect to the FFT index that is based on the MT receiver under consideration. Because the spectrum of this bandwidth class specific OFDM symbol may be extended during the actual transmission, a preventive power-shaping LPF 72 can be applied to gradually reduce the power at the edge of the OFDM symbol spectrum. A possible power-shaping LPF function is shown in Fig. 9.

After the power-shaping LPF 72, the index shifter 73 re-maps the MT receiver based FFT indices onto the AP transmitter based FFT indices, whose FFT size $N_{d\_tx}$ is larger than the FFT size $N_{d\_rx}$ of the MT receiver. The re-mapping is done by assigning the first $N_{d\_rx}/2$ sub-carriers of the MT receiver based FFT window to the first $N_{d\_rx}/2$ indices of the AP transmitter based FFT window, and by assigning the last $N_{d\_rx}/2$ sub-carriers of the MT receiver based FFT window to the last $N_{d\_rx}/2$ indices of the AP transmitter based FFT window. This operation is illustrated in Fig. 10.

General layout for downlink receiver

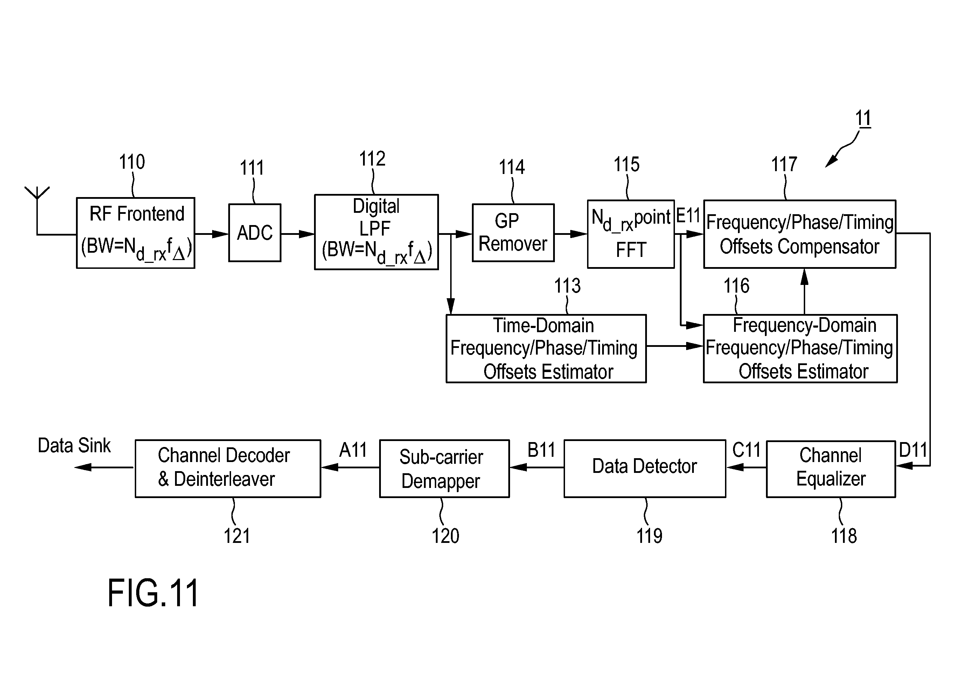

Fig. 11 shows a block diagram of a receiver architecture for downlink, i.e. the schematic layout of the downlink receiving unit 11 of a user terminal of a specific bandwidth class according to the present invention for use in a basic asymmetric OFDM communication system.

A conventional RF front-end 110, a conventional ADC 111, and a conventional digital low-pass filter 112, which are dimensioned for the terminal-specific bandwidth of $N_{d\_rx}f_\Delta$ receive the mixed RF OFDM signals from the access point, convert the signals to digital format and filter out the out-of-band unwanted signals. The digital signal after the digital LPF 112 only contains the channel encoded symbols of the smallest bandwidth up to the bandwidth $N_{d\_rx}f_\Delta$, which is the bandwidth of the considered terminal. If a preamble is sent to the terminal under consideration, a time-domain frequency/phase/timing offsets estimator 113 performs the frequency, phase, and timing acquisition and tracking based on a special bit pattern in the preamble. After the time-domain frequency/phase/timing offsets estimator 113 the guard period is removed in a GP remover 114, and the remaining $N_{d\_rx}$ samples undergo a conventional $N_{d\_rx}$ point FFT in an FFT unit 115. The output vector E11 (the frequency domain OFDM signal) of the $N_{d\_rx}$ point FFT unit 115 contains the sub-carriers up to the bandwidth of the considered terminal.

If the access point sends common or terminal-specific pilot tones, a frequency-domain frequency/phase/timing offsets estimator 116 can execute another frequency/phase/timing offsets estimation in the frequency domain. A preamble may be constructed such that it also carries pilot tones for channel estimation and additional frequency/phase/timing tracking in the frequency domain. The frequency-domain frequency/phase/timing offsets estimator 116 also utilizes the results from the time-domain frequency/phase/timing offsets estimator 113 to increase the precision and confidence of the estimation. A frequency/phase/timing offsets compensator 117 exploits the final frequency/phase/timing estimation results for the considered terminal to compensate for the offsets on the modulated sub-carriers in the frequency domain OFDM signal E11.

Thereafter, channel equalization is executed on the output vector D5 of the frequency/phase/timing offsets compensator 117 in a channel equalizer 118, because its result is more reliable on D11, rather than on E11, after the frequency/phase/timing offsets are cleaned up. The channel equalizer 118 delivers its output vector C11, which contains all possible sub-carriers of the terminal. Because the output vector C11 of channel equalizer 118 is still affected by noise and interferences, in general, a data detector 119 (e.g. MLSE) can be applied to statistically optimize the demodulation result for each connection on a used sub-carrier.

The statistically optimized detection results are delivered to a sub-carrier demapper 120, which reconstructs the m complex valued channel encoded symbols as the components of A11 for the considered terminal. Finally, the channel encoded symbols are de-interleaved and channel-decoded in a channel decoder and deinterleaver 121 to obtain the original upper layer data.

The sub-carrier demapper 120 and the channel decoder and deinterleaver 121 are generally also called downlink OFDM decoding means, and the FFT unit 115 and the OFDM decoding means are generally also called downlink OFDM demodulation means.

The MT receiver is a conventional OFDM receiver. After the ADC 111, which may be clocked at a rate higher than BW=$N_{d\_rx}f_\Delta$, a digital low-pass filtering 112 is executed. If the ADC 111 is over-sampling, the digital LPF 112 is also followed by a down-sampling to the required bandwidth $N_{d\_rx}f_\Delta$.

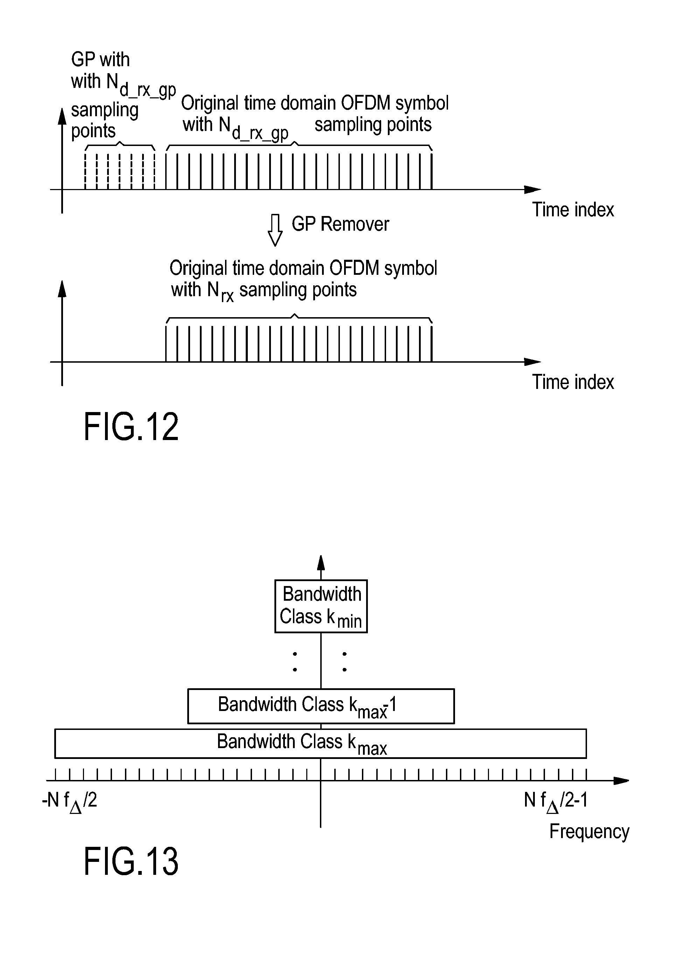

The GP remover 54 removes the $N_{d\_rx\_gp}$ preceding samples from each time domain OFDM symbol with guard period, as is illustrated in Fig. 12.

The $N_{d\_rx}$-point FFT transformer 115 transforms the time domain OFDM symbol without guard period to an OFDM symbol in the frequency domain. After frequency/phase/timing offset compensation, channel equalization and data detection, the sub-carrier demapper 120 maps the m reconstructed used sub-carriers of each frequency domain OFDM symbol B(k) to m channel encoded data symbol a_1(k), a_2(k),... a_m(k) for further processing by the channel decoder and deinterleaver 121.

In the following, further embodiments of the general communication system according to the present invention as described in detail above shall be explained.

Preamble design

First, an embodiment using preambles in the downlink transmission from the AP to a MT belonging to a specific bandwidth class, and/or in the uplink transmission from a MT belonging to a specific bandwidth class to the AP shall be explained.

It is well know that OFDM systems require preambles to enable frequency/clock, phase, and timing synchronization between the transmitter and receiver, which is very crucial for goodperformance. The processing of preambles takes place in the time-domain frequency/phase/timing offsets estimator and/or in the frequency-domain frequency/phase/timing offsets estimator of uplink and downlink receiver. There are many different methods to exploit preambles for various types of synchronization.

Because the AP has to support MTs of different bandwidths in the above described bandwidth asymmetric OFDM system according to the present invention, a straightforward application of the conventional preamble design paradigm may lead to independent generation and processing of preambles for different bandwidth classes. This would mean an increased amount of system control data, which are overhead, and more baseband processing. In the following a harmonized preamble design approach will be explained by which these disadvantages can be avoided.

The AP in the proposed bandwidth asymmetric OFDM system supports MTs of different bandwidths. Let the k-th bandwidth class of MTs be defined as the class of MTs, whose FFT/IFFT has only $2^k$ coefficients, and whose FFT/IFFT sampling rate is $2^k f_\Delta$, where $f_\Delta$ is sub-carrier spacing, which is set equal for both the AP and MT. Without loss of generality, the FFT/IFFT sampling rate of the AP is equal to that of the MTs belonging to the highest bandwidth class.

After the Parseval's Theorem

$$\int_{-\infty}^{\infty} s_1(t)s_2(t)dt = \int_{-\infty}^{\infty} S_1(f)S_2^*(f)df$$

an OFDM preamble with good autocorrelation property in the frequency domain will also have good autocorrelation property in the time domain. This is the reason why the preambles for the IEEE802.11a system are based on short and long synchronization sequences with good autocorrelation property in the frequency domain, although the synchronization operation itself is done in the time-domain in most practical implementations.

Let the size of the FFT unit in the AP be N=$2^{kmax}$. These N spectral coefficients represent physically a (periodic) spectrum from -N $f_\Delta$/2 to N $f_\Delta$/2 -1. The MTs of the different bandwidth classes use differently the FFT coefficients over this entire spectrum. Fig. 13 illustrates how the different bandwidth classes share the different spectral coefficients. The lower frequent the spectral coefficients are, the more bandwidth classes are using them.

Because MTs of different bandwidths are using sub-carriers within their overlapping spectrum, there is now a possibility to design a set of preamble sequences Pr(i) with a harmonized framework structure to be used by the MTs of different bandwidths. For the case of single user access, the bandwidth of the preamble has to fit the bandwidth of that user. Of course, you could send a downlink preamble, whose bandwidth is larger than that of the receiving user. But the energy outside the bandwidth of the receiving user is wasted, which results in inefficient use of the transmission power. Therefore, for the single user case described above it is preferably proposed to use a set of preambles of a harmonized framework structure as shown below, while the bandwidth of each preamble fits the bandwidth of the corresponding bandwidth class.

In general, the following requirements shall be met to get the set of the preamble sequences having a harmonized framework structure:

a) Each of the $M_k$ samples, often called chips, of the k-th preamble in the set, Pr_k(i), i=0,..M_k-1, shall be assigned to one unique sub-carrier of the k-th bandwidth class.. There is a relationship between the total numbers of chips of the different preambles in the set. If the preamble Pr_k(i) for the k-th bandwidth class with $2^k$ sub-carriers contains $M_k$ chips, the preamble Pr_k+1(i) for the k+1-th bandwidth class with $2^{k+1}$ sub-carriers shall contain $2M_k$ chips, i.e. $M_{k+1}=2M_k$.. The first $M_k$ chips of Pr_k+1(i) shall be assigned to the same sub-carriers as the $M_k$ chips of Pr_k(i).

b) For the minimum bandwidth class to be considered, which contains $N_{min}=2^{kmin}$ lowest-frequent FFT coefficients, the chips of Pr_kmin(i) falling in the bandwidth of the minimum bandwidth class shall have good auto-correlation property. This implies that there are enough chips, say >4, falling into the minimum bandwidth class.

c) For two bandwidth classes $k_1$ and $k_2$, which contain $2^{k1}$ and $2^{k2}$ FFT coefficients, respectively, and $k_1>k_2>k_{min}$, the autocorrelation property of the chips of Pr_kl(i), which fall into the $k_1$-th bandwidth class shall be equal or better than the autocorrelation property of the chips of Pr_k2(i), which fall into the $k_2$-th bandwidth class. This is because Pr_kl(i) for the $k_1$-th bandwidth class contains more chips than Pr_k2(i) for the $k_2$-th bandwidth class.

d) The samples of any two different preambles $Pr_1(i)$ and $Pr_2(i)$, which fall into the same bandwidth class shall be orthogonal to each other.

Following these design requirements and assuming that the lowest bandwidth class will contain enough FFT coefficients, say $N_{min}=16$, it is preferably proposed to use the orthogonal Gold code of length M_k as a dedicated preamble for the k-th bandwidth class, as for instance described in the book "OFDM and MC-CDMA for Broadband Multi-User Communications, WLANs and Broadcasting" by L. Hanzo, M. Muenster, B.J. Choi, T. Keller, John Wiley & Sons, June 2004 where such orthogonal Gold codes are described. However, any other code families with good autocorrelation property and possible lengths of $2^k$ can also be used as preambles for different bandwidth classes. An example of a set of Gold codes of different lengths showing how the samples of each Gold sequence are assigned to selected sub-carriers of the corresponding bandwidth class will be given in the following.

Suppose $k_{max}$ is the index of the largest bandwidth class, and $N_{max}$ is the number of sub-carriers in of the largest bandwidth class. Let the Gold sequence for the largest bandwidth class be Pr_kmax(i), which has a length $M_{kmax}=2^{m\_max}$ with $M_{kmax}\leq N_{max}$, in general. Let the number of the different bandwidth classes be $Q=2^q$, q<m, and $k_{min}$ be the index for the minimum bandwidth class. Starting with the minimum bandwidth class the following successive design rules apply:

a) The minimum bandwidth class shall contain the first $M_{kmin}= M_{kmax}/Q$ samples of the Gold sequence Pr_kmax (i). These $M_{kmin}$ samples may or may not be equidistantly assigned to the $N_{min}=2^{kmin}$ sub-carriers of the minimum bandwidth class which can be chosen according to the desired individual system design.
b) Suppose $M_k$ samples are assigned to the k-th bandwidth class, the k+1-th bandwidth class shall contain the first $2M_k$ samples of the Gold sequence Pr_kmax(i). The first half of these $2M_k$ samples is the same as the samples for the k-th bandwidth class. That means the k-th bandwidth class decides their assignment to sub-carriers. The second half of these $2M_k$ samples are assigned to the sub-carriers which fall into the frequency of the k+1-th bandwidth class, but do not fall into the frequency of the k-th bandwidth class. Again, the positions of the sub-carriers the second half of these $2M_k$ samples are assigned to can be freely chosen.

The so generated Gold sequence Pr_k(i) containing $M_k$ samples is bandwidth limited to the bandwidth of the k-th bandwidth class, and therefore can be used as the downlink and/or uplink preamble for any MT belonging to the k-th bandwidth class. If two preambles for the different bandwidth classes are overlapping in their occupied bandwidths, their samples in the overlapping frequency band are always assigned to the same sub-carriers.

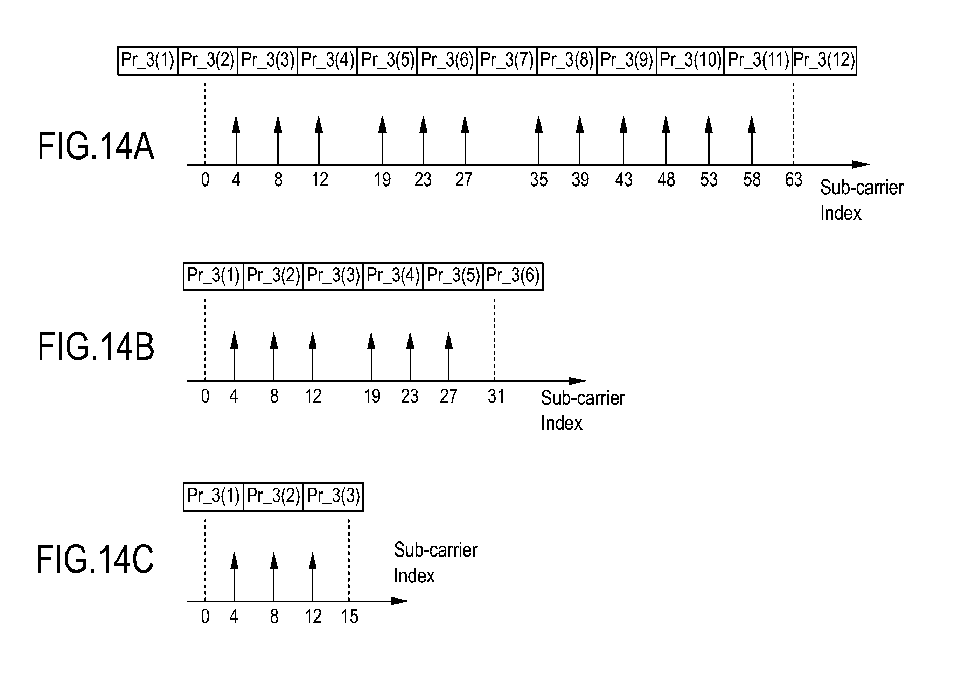

As an example, 3 different bandwidth classes are assumed.. The largest bandwidth class has 64 FFT coefficients, the second largest one 32 FFT coefficients, and the smallest bandwidth class has 16 FFT coefficients. That means $k_{max}=6$ and $k_{min}=4$. The Gold sequence for the largest bandwidth class has 12 samples Pr_6(i), i=1,..,12. Fig. 14 shows how starting from this Gold sequence for the largest bandwidth class and its assignment to 12 selected sub-carriers 4, 8, 12, 19, 23, 27, 35, 39, 43, 48, 53, 58 the preamble sequences for other bandwidth classes and their assignment to sub-carriers are determined according the above design rules. Fig. 14A shows the preamble Pr_6(i) for the largest bandwidth class and a possible assignment to 12 sub-carriers, Fig. 14B shows the preamble Pr_5(i) for the second largest bandwidth class and the derived assignment to 6 sub-carriers, Fig. 14C shows the preamble Pr_4(i) for the smallest bandwidth class and the derived assignment to 3 sub-carriers.

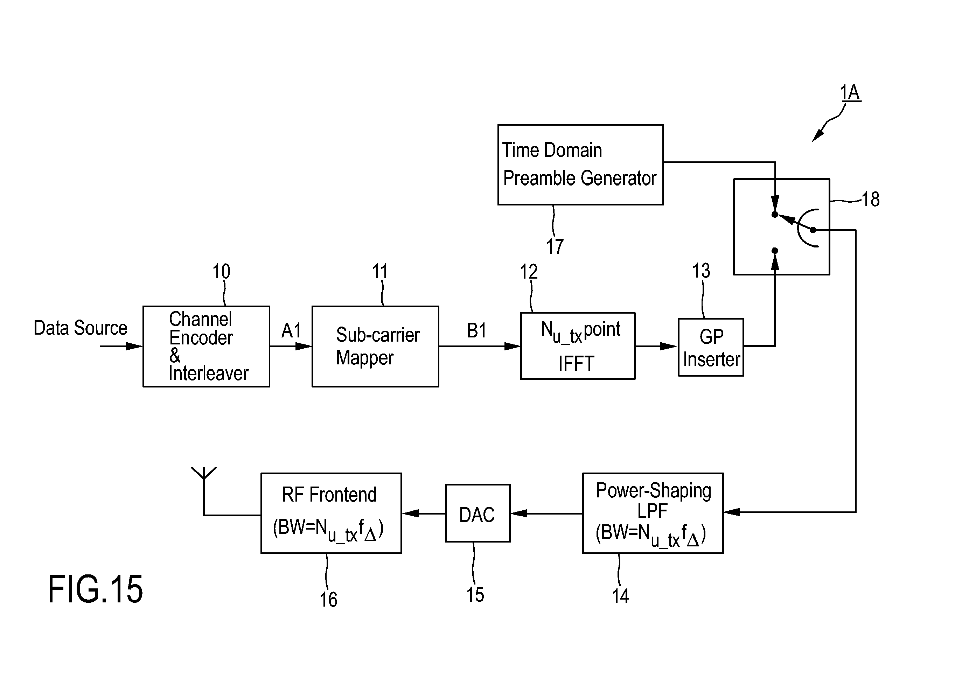

Fig. 15 shows a layout of the uplink transmitter 1A with means for preamble insertion which is based on the layout shown in Fig. 1. The switch 18 determines if a preamble sequence or a OFDM user data block will be transmitted in uplink by the MT. The time domain preamble generator 17 may generate the preamble directly in the time domain, or first generate a temporary preamble in the frequency domain according to a design rule, and then transform this temporary preamble to the final time domain preamble through a $N_{u\_tx}$ point IFFT. The time domain preamble is preferably stored in a memory (not shown). When the switch 18 is in the upper position, the time domain preamble is read out at the right clock rate, and the transmission of the OFDM user data block is suspended.

At the uplink receiver (as generally shown in Fig. 4), the preamble sequence will be exploited by the time-domain frequency/phase/timing offsets estimator 43 and/or frequency-domain frequency/phase/timing offsets estimator 47. If only the time-domain frequency/phase/timing offsets estimator 43 will exploit the preamble sequence, only the RF front-end 40, ADC 41, digital LPF 42 and time-domain frequency/phase/timing offsets estimator 43 of the uplink receiver 4 shown in Fig. 4 will process the preamble sequence. If also the frequency-domain frequency/phase/timing offsets estimator 47 will exploit the preamble sequence, the common $N_{u\_rx}$ point FFT unit 45, windowing & mixing unit 46, and frequency-domain frequency/phase/timing offsets estimator 47 of the uplink receiver 4 will process the preamble sequence, too. The GP remover 44 may be disabled, depending on the actual design of the preamble.

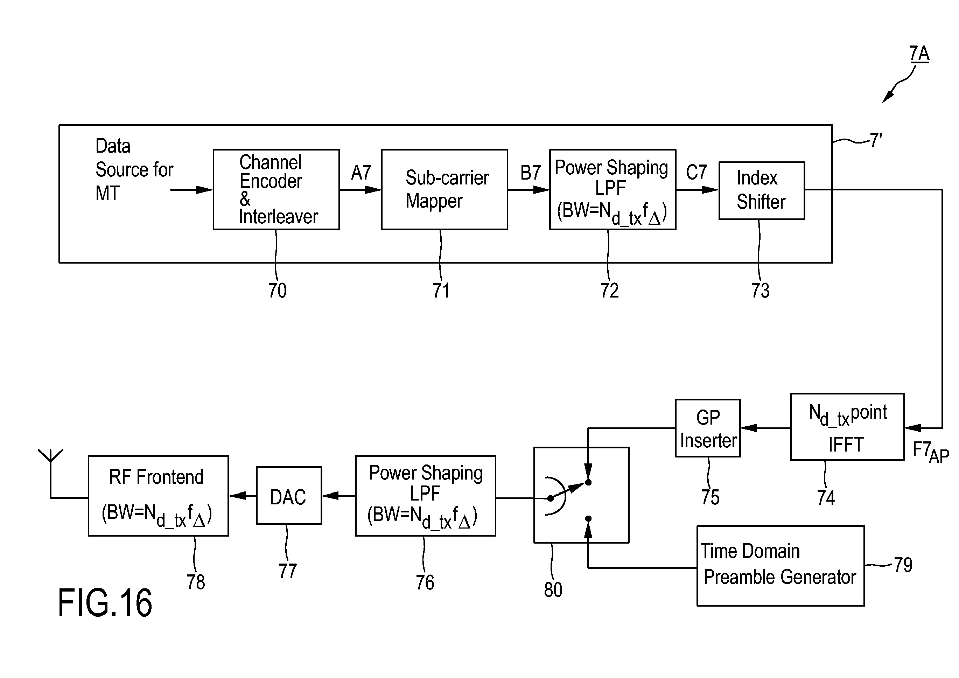

Fig. 16 shows a layout of the downlink transmitter 7A with means for preamble insertion which is based on the layout shown in Fig. 7. The switch 80 determines if the AP will transmit a preamble sequence or an OFDM user data block in downlink. The time domain preamble generator 79 may generate the preamble directly in the time domain, or first generate a temporary preamble in the frequency domain according to a design rule for the conventional FFT index numbering system of the bandwidth class under consideration. Then, the temporary preamble needs to be index-shifted to the FFT index numbering system of the common FFT unit, and finally transformed to the time domain preamble through the common $N_{d\_tx}$ point IFFT for all bandwidth classes. The time domain preamble is preferably stored in a memory. When the switch is in the lower position, the time domain preamble is read out at the right clock rate, and the transmission of the OFDM user data block is suspended.

At the downlink receiver (as generally shown in Fig. 11), the preamble sequence will be exploited by the time-domain frequency/phase/timing offsets estimator 113 and/or frequency-domain frequency/phase/timing offsets estimator 116. If only the time-domain frequency/phase/timing offsets estimator 113 will exploit the preamble sequence, only the RF front-end 110, ADC 111, digital LPF 112 and time-domain frequency/phase/timing offsets estimator 113 in the downlink receiver 11 shown in Fig. 11 will process the preamble sequence. If also the frequency-domain frequency/phase/timing offsets estimator 116 will exploit the preamble sequence, the $N_{d\_rx}$ point FFT unit 115, and frequency-domain frequency/phase/timing offsets estimator 116 will process the preamble sequence, too. The GP remover 114 may be disabled, depending on the actual design of the preamble.

The above proposal to send or receive preambles by the AP regularly or on demand to/from the different MTs supplements the communication system proposed according to the present invention. It makes the cost, size, and power consumption of the MT scalable, hence covers a much larger area of potential applications than any single known wireless system.

Coexistence between known and new communication systems

Next, an embodiment will be described explaining the coexistence between known OFDM communication systems and the OFDM communication system according to the present invention, even in the same frequency band.

Starting with the basic requirement of maximum hardware component sharing and possible concurrent communications with MTs of both the new and legacy OFDM systems, it is important for this requirement that the sub-carrier spacing $f_\Delta$ of the new OFDM system is set to that of the legacy OFDM system. For IEEE802.11a/n the sub-carrier spacing is 20MHz/64=312.5 kHz. The uplink guard period of the new OFDM system is assumed to be the same or larger than that of the legacy OFDM system, and the downlink guard period is assumed to be the same for both systems.

To inform the MTs of the new OFDM system of the activity of a legacy OFDM system, the AP sends a continuous cosine waveform at a frequency at $f_\Delta/4$, if the AP is in the legacy system mode, even if the AP is concurrently also in the new system mode. That means the continuous cosine waveform is only absent, if the AP is only in the new system mode. The frequency of the cosine waveform is chosen closely to the DC sub-carrier of the channel encoded symbols, because the DC sub-carrier is neither used by the legacy OFDM system, nor by the new OFDM system. The MTs of the new OFDM system detect the cosine waveform at the given frequency to be notified of the existence of a legacy OFDM system. Frequency, or phase, or amplitude modulation on the cosine waveform is possible to convey very low speed signaling messages from the AP to all MTs of the new bandwidth asymmetric OFDM system. These messages could contain, for example, the parameters of the legacy system.

Alternating-mode embodiment for coexistence

According to an alternating-mode embodiment for coexistence with legacy OFDM systems the AP alternates its operation between the new system mode and the legacy system mode, once it has detected a user activity in the legacy system mode. For the purpose of detecting legacy system's users, the AP may temporarily suspend all transmissions in the new system by sending the continuous cosine waveform, thus making the shared spectrum free for carrier sensing by a legacy system's user station, so that it will start the association process with the AP in the legacy system mode. If within a time period no association request is received, the AP terminates the sending of the continuous cosine waveform, thus switching back to the normal mode for the new system.

If at least one legacy system's user is associated with the AP, the AP shall alternate its operation between two modes by switching on and off the continuous cosine waveform. The duration in each mode will be decided on the traffic load in each system, or another priority policy. The minimum duration in the legacy system mode is reached after no activity in the legacy system has been detected for a given period of time.

Below it will be discussed how the transmitter and receiver components of the new bandwidth asymmetric OFDM system can be reused for the legacy OFDM system in the AP. The discussion is based on the uplink receiver architecture described above and shown in Fig. 4 and the downlink transmitter architecture described above and shown in Fig. 7.

Referring to the uplink receiver architecture as shown in Fig. 4, there is no need to add a new RF front-end for the AP to support the legacy system 802.11a/n. If the uplink guard period is different for the different systems, the GP remover 44 in Fig. 4 shall remove the right guard period samples for the actual system mode. Because the bandwidth of the legacy system coincides with the bandwidth of one of supported bandwidth classes, the common $N_{u\_rx}$ point FFT 45 and the windowing & mixing unit 46 can be reused for the legacy system.

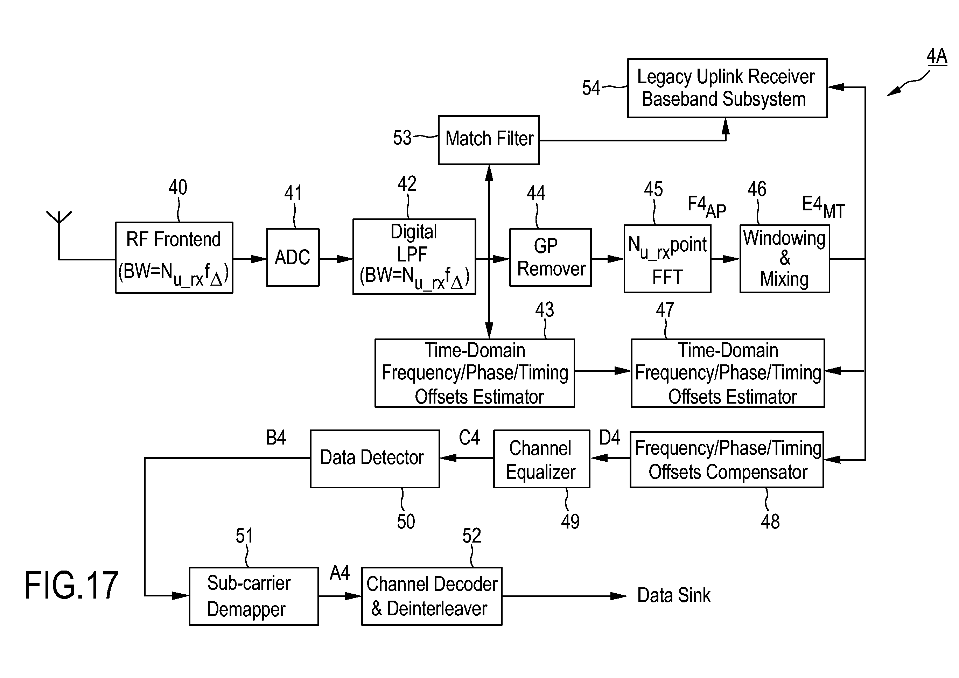

The windowing & mixing will deliver $N_L$ FFT coefficients of the legacy OFDM system, on which a dedicated baseband processing for the legacy system can follow. That means the units following the windowing & mixing unit 46 in Fig. 4 cannot be reused without modification. A modified layout - based on the layout of Fig. 4 - of the uplink receiver 4A is thus provided as shown in Fig. 17. Because the time-domain frequency/phase/timing offsets estimator 43 is designed for the new OFDM system, a dedicated match filter 53 is added in the time domain for the legacy OFDM system, which is matched to the short and long preambles of the legacy OFDM system, to do frequency and timing acquisition. Further, a legacy uplink receiver baseband sub-system 54 is provided which follows the FFT in the conventional design.

It is to be noted that the blocks 53 and 54 are only active if the AP is in legacy system mode, that the blocks 43, 47 to 52 are only active if the AP is in new system mode, and that the remaining blocks 40 to 42 and 44 to 46 are common blocks in either mode.

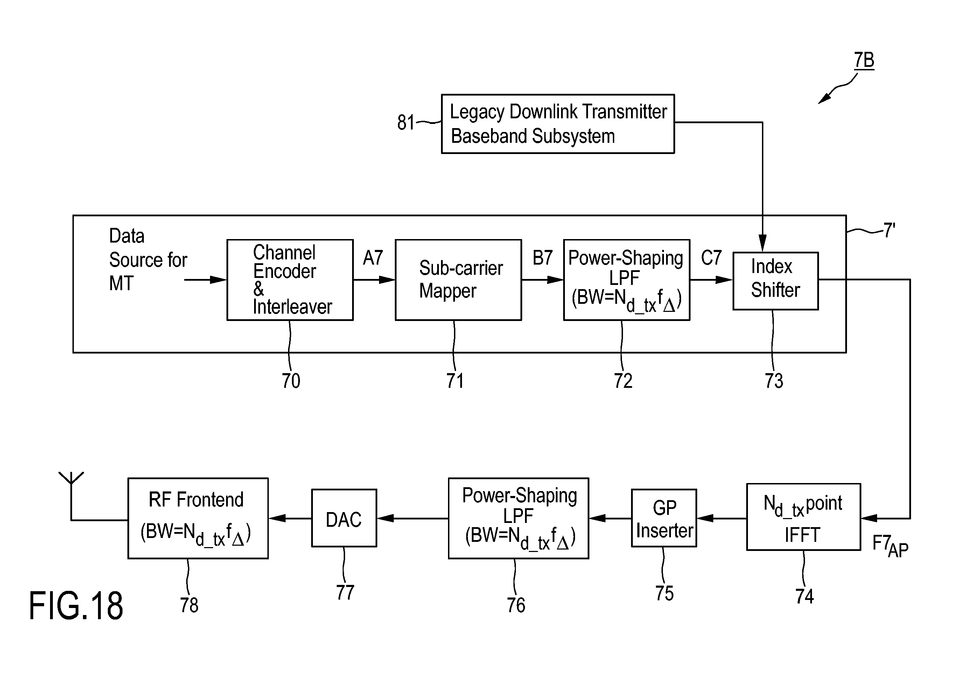

Referring to the downlink transmitter architecture as shown in Fig. 7, the legacy OFDM system requires dedicated baseband functional blocks up to the power shaping LPF 72 in the frequency domain. That means the reusability starts with the power shaping LPF 72. A modified layout - based on the layout of Fig. 7 - of the downlink transmitter 7B is thus provided as shown in Fig. 18. The dedicated functional blocks of the legacy downlink transmitter baseband subsystem 81 will generate an $E7_{MT\_u}(i)$ vector, which contains the $N_L$ FFT coefficients of the legacy system. For IEEE802.11a, $N_L=64$. An optional digital waveform shaping operation can be executed on $E7_{MT\_u}(i)$ by the means of power shaping LPF 72 to better match the channel characteristic. Because the bandwidth of the legacy system coincides with the bandwidth of one of supported bandwidth classes, the index shifter for that bandwidth class can be reused to shift the $N_L$ spectral coefficients of the legacy system to the right positions within the $N_{d\_tx}$ point window of the common IFFT unit 74. After the IFFT unit 74, the GP inserter 75 will insert the common guard period, independently of the system mode. The DAC 77 and the RF front-end 78 in Fig. 7 can then be completely reused for the legacy system.

It is to be noted that the block 81 is only active if the AP is in legacy system mode, that the blocks 70 to 72 are only active if the AP is in new system mode, and that the remaining blocks 73 to 78 are common blocks in either mode. Further, the representative vector $E7_{MT}$ in Fig. 18, which is generated for the new system, must not contain sub-carriers within the frequency band of the legacy subsystem 81, to ensure the frequency division of the two systems.

Concurrent-mode embodiment for coexistence

The above explained alternating-mode embodiment for coexistence has the disadvantage that in the legacy system mode only a part of the entire bandwidth for the new system is used. The following concurrent-mode embodiment for coexistence overcomes this disadvantage by allowing all MTs of the new OFDM system to communicate with the AP over those sub-carriers within their bandwidth class that lie outside the frequency band of the legacy system, if at least one legacy system's user is associated with the AP. That means that as long as the continuous cosine waveform is transmitted, all MTs of the new system and the AP refrain from using the sub-carriers within the frequency band occupied by the legacy system. This also applies to preambles and pilot tones used in the new system.

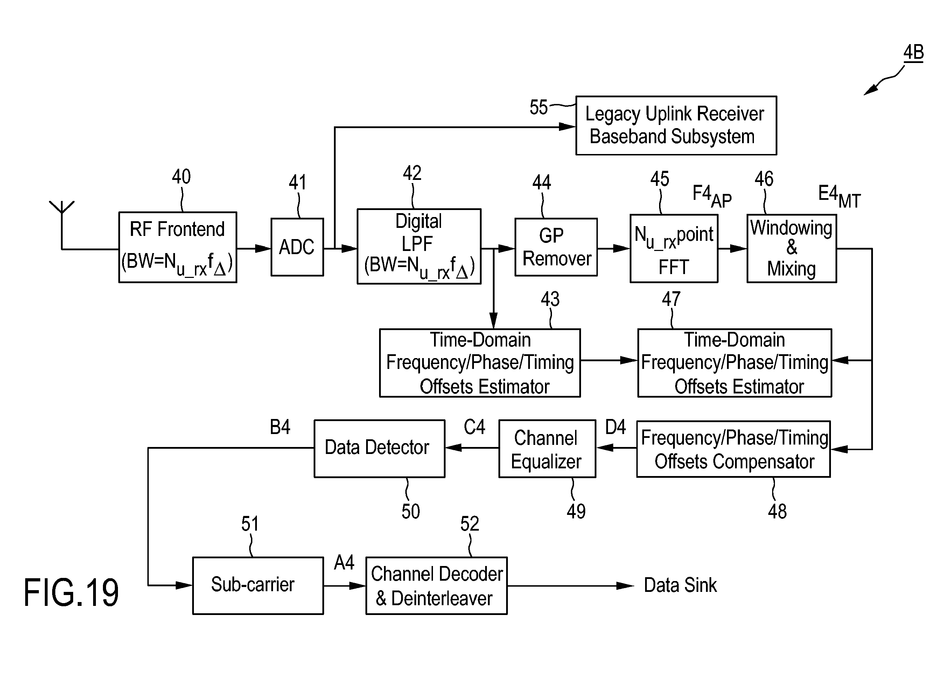

Because the channel encoded symbols of the legacy system arrive at the AP independently of the OFDM symbol timing of the new system, a concurrent FFT for channel encoded symbols from both the new system and the legacy system in the uplink receiver is difficult. Therefore, only the RF front-end 40 of the architecture shown in Fig. 4 should be used concurrently by the two systems, which is possible due to frequency division (i.e. no shared sub-carriers) for the two systems. A modified layout - based on the layout of Fig. 4 - of the uplink receiver 4B is thus provided as shown in Fig. 19. After the common ADC block 41, an additional independent baseband branch is used including a uplink receiver baseband subsystem 55 for all remaining necessary baseband functions for the legacy system, which may run at a different hardware clock as the hardware clock for the baseband branch for the new OFDM system.

The windowing & mixing unit 46 following the FFT unit 45 for the new system shall only deliver re-ordered sub-carriers outside the frequency band of the legacy system. The digital LPF filter (not shown) in the independent baseband subsystem 55 for the legacy system, which usually immediately follows the ADC 41, shall take care that only the relevant bandwidth of the legacy system is filtered out.

It is to be noted that in concurrent mode all blocks shown in Fig. 19 are generally active. Further, it is to be noted that the downlink transmitter in the AP for concurrent mode has the same architecture as the downlink transmitter architecture in the AP for alternating mode as shown in Fig. 18. The only difference is that in the concurrent mode all blocks are generally active, which means that blocks 70 to 72 and 81 are active at the same time.

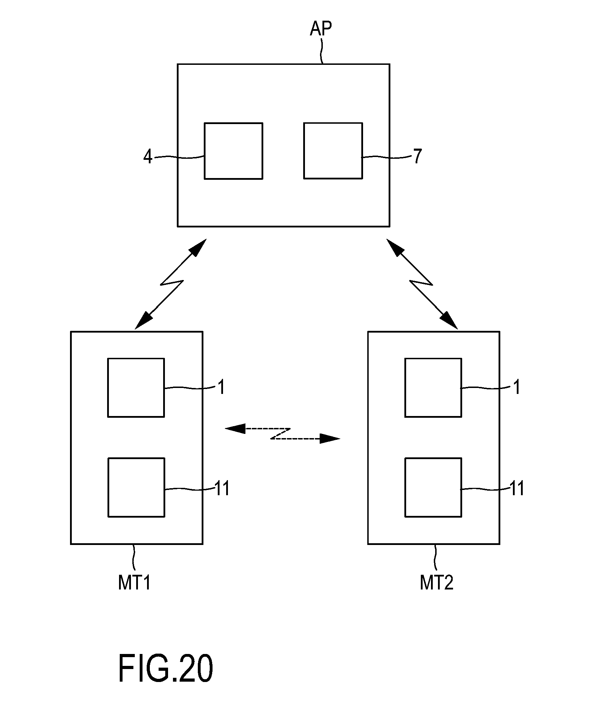

Fig. 20 shows a simple block diagram of a communications system in which the present invention can be used. Fig. 20 shows particularly an access point AP having an uplink receiving unit 4 and a downlink transmission unit 7 and two terminals MT1, MT2 comprising an uplink transmission unit 1 and a downlink receiving unit 11. Such a communications system could, for instance, be a telecommunications system, in which the access point AP represents one of a plurality of base stations and in which the terminals MT1, MT2 represent mobile stations or other mobile devices. However, the communications system could also of any other type and/or for any other purpose.

The above proposal to enable coexistence between known OFDM systems and the new OFDM system supplements the communication system proposed according to the present invention. It makes the cost, size, and power consumption of the MT scalable, hence covers a much larger area of potential applications than any single known wireless system. In particular, the following new functions are enabled:

a) The AP can tell the MT of the new bandwidth asymmetric OFDM system that a legacy OFDM system has become active, and that all the spectrum resources needed by the legacy OFDM system are blocked for being used by the new bandwidth asymmetric OFDM system.

b) The AP can either switch between the two system modes, or communicate with the MTs of the two different OFDM systems in parallel.

Furthermore, it has been shown that there is possibility to reuse all the RF components and part of the baseband unit (e.g. software modules) of the new OFDM system for the legacy OFDM system.

In summary, the major technical challenges arising from the new design of the communication system according to the present invention are as follows.

MTs of different bandwidths can communicate with the AP at different times (e.g. TDMA, FDMA, CSMA based) or the same time (e.g. CDMA based)

MT of a given bandwidth class can still have multiple connections of different bit rates (multi-rate within each terminal class)

Uplink synchronization between the channel encoded symbols from MTs of different bandwidths

Low complexity implementation of the AP by a common OFDM modulation and demodulation architecture with a single FFT/IFFT engine for all MTs of different bandwidths

Low complexity implementation of RF front-end by using a common RF channel selection filter in the AP for all MTs of different bandwidths

Effective support for channel equalization

Effective support for interference mitigation

Effective support for pre-distortion or pre-equalization

Robustness to inter-carrier-interference (ICI), inter-symbol-interference (ISI), and Doppler-shift

Reduced sensitivity to timing, frequency, phase and clock offsets

Efficient MAC

Spectrum co-existence with legacy wireless systems.

It should be noted that the invention is not limited to any of the above described embodiments, such as a telecommunications network including mobile phones and base stations or a IEEE802.11a system. The invention is generally applicable in any existing or future communication systems and in terminals and access points of such communication systems for transmitting any kind of content. The invention is also not limited to any particular frequency ranges or modulation technologies.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measured cannot be used to advantage.

Any reference signs in the claims should not be construed as limiting the scope.

## Claims

1. Communication system comprising at least one terminal having an uplink transmission unit (1) for transmitting radio frequency OFDM signals at a radio frequency and an access point having an uplink receiving unit (4) for receiving said radio frequency OFDM signals, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit.

2. Communication system, in particular according to claim 1, wherein the access point has a downlink transmission unit (7) for transmitting radio frequency OFDM signals at a radio frequency and that the at least one terminal has a downlink receiving unit (11) for receiving said radio frequency OFDM signals, **characterized in that** the bandwidth of said downlink transmission unit is larger than the bandwidth of said downlink receiving unit and that the downlink transmission unit is adapted to generate and transmit radio frequency OFDM signals having a bandwidth that is smaller than the bandwidth of the downlink transmission unit and that is equal to the bandwidth of the downlink receiving unit.

3. Communication system according to claims 1 and 2, **characterized in that** the uplink transmission unit (1) and the downlink transmission unit (7) are adapted for generating and transmitting radio frequency OFDM signals having equal OFDM symbol lengths and equal guard intervals between said OFMD symbols.

4. Communication system according to claims 1 and/or 2, **characterized in that** the uplink transmission unit (1A) and/or the downlink transmission unit (7A) comprise preamble adding means (17, 18; 79, 80) and preamble for generating and adding preambles to the transmitted radio frequency OFDM signals and that the uplink receiving unit (4) and/or the downlink receiving unit (7) comprises preamble evaluation means (43, 47; 113, 116) for detecting and evaluating the preambles in the received radio frequency OFDM signals.

5. Communication system according to claim 4, **characterized in that** the preamble adding means (17, 18; 79, 80) are adapted for adding preambles according to a Gold code.

6. Method for communicating in a communication system according to claim 1 comprising at least one terminal having an uplink transmission unit (1) for transmitting radio frequency OFDM signals at a radio frequency and an access point having an uplink receiving unit (4) for receiving said radio frequency OFDM signals, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit.

7. Method, in particular according to claim 6, for communicating in a communication system according to claim 2, wherein the access point has a downlink transmission unit (7) for transmitting radio frequency OFDM signals at a radio frequency and that the at least one terminal has a downlink receiving unit (11) for receiving said radio frequency OFDM signals, **characterized in that** the bandwidth of said downlink transmission unit is larger than the bandwidth of said downlink receiving unit, that the downlink transmission unit is adapted to generate and transmit radio frequency OFDM signals having a bandwidth that is smaller than the bandwidth of the downlink transmission unit and that is equal to the bandwidth of the downlink receiving unit.

8. Terminal for use in a communication system according to claim 1 comprising an uplink transmission unit (1) for transmitting radio frequency OFDM signals at a radio frequency for receiption by an access point having an uplink receiving unit (4) for receiving said radio frequency OFDM signals, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit.

9. Terminal according to claim 8, **characterized in that** the uplink transmission unit comprises:

- uplink OFDM modulation means (10, 11, 12) for converting an input data signal into a baseband OFDM signal having $N_{u\_tx}$ frequency sub-carriers spaced at a sub-carrier distance ($f_\Delta$), and
- uplink RF transmission means (16) for converting the baseband OFDM signal into the radio frequency OFDM signal and for transmitting said radio frequency OFDM signal having a bandwidth of $N_{u\_tx}$ times the sub-carrier distance ($f_\Delta$),

wherein said uplink OFDM modulation means and said uplink RF transmission means have a bandwidth of $N_{u\_tx}$ times the sub-carrier distance ($f_\Delta$).

10. Terminal according claim 9, **characterized in that** the uplink OFDM modulation means comprises:

- uplink coding means (10, 11) for deriving a frequency domain OFDM source signal from the data signal, the frequency domain OFDM source signal comprising $N_{u\_tx}$ OFDM sub-carriers, and
- uplink IFFT means (12) for performing a $N_{u\_tx}$ - point Inverse Fast Fourier transform operation on the frequency domain OFDM source signal to obtain the baseband OFDM signal.

**11.** Terminal according to claim 10, **characterized in that** the uplink coding means comprises:

    - uplink symbol generation means (10) for mapping bits of the data signal onto complex valued channel encoded symbols, and
    - uplink sub-carrier mapping means (11) for mapping the complex valued channel encoded symbols onto $N_{u\_tx}$ OFDM sub-carriers to obtain the frequency domain OFDM source signal.

**12.** Terminal, in particular according to claim 8, for use in a communication system according to claim 2, comprising a downlink receiving unit (11) for receiving radio frequency OFDM signals transmitted by an access point having a downlink transmission unit (4) for transmitting radio frequency OFDM signals at a radio frequency, **characterized in that** the bandwidth of said downlink transmission unit is larger than the bandwidth of said downlink receiving unit and that the downlink transmission unit is adapted to generate and transmit radio frequency OFDM signals having a bandwidth that is smaller than the bandwidth of the downlink transmission unit and that is equal to the bandwidth of the downlink receiving unit.

**13.** Terminal according to claim 12, **characterized in that** the downlink receiving unit (11) comprises:

    - downlink RF reception means (110) for receiving a radio frequency OFDM signal and for converting the received radio frequency OFDM signal into a baseband OFDM signal, and
    - downlink OFDM demodulation means (115, 120, 121) for demodulating the baseband OFDM signal into an output data signal,

wherein said downlink RF reception means and said downlink OFDM demodulation means have a bandwidth of $N_{d\_rx}$ times the sub-carrier distance ($f_\Delta$), wherein $N_{d\_rx}$ is equal to or smaller than $N_{d\_tx}$.

**14.** Terminal according claim 13, **characterized in that** the downlink OFDM demodulation means comprises:

    - downlink FFT means (115) for performing a $N_{d\_rx}$ - point Fast Fourier Transform operation on the baseband OFDM signal to obtain a frequency domain OFDM signal, the frequency domain OFDM signal comprising $N_{d\_rx}$ frequency sub-carriers, and
    - downlink decoding means (120, 121) for deriving the output data signal from the frequency domain OFDM signal.

**15.** Terminal according to claim 14, **characterized in that** the downlink decoding means comprises:

    - downlink sub-carrier demapping means (120) for demapping the $N_{d\_rx}$ frequency sub-carriers of the frequency domain OFDM signal onto complex valued channel coded symbols, and
    - downlink symbol demapping means (121) for demapping the complex valued channel coded symbols onto bits of the output data signal.

**16.** Access point for use in a communication system according to claim 1 comprising an uplink receiving unit (4) for receiving radio frequency OFDM signals transmitted by a terminal having an uplink transmission unit (1) for transmitting radio frequency OFDM signals at a radio frequency, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit.

**17.** Access point according to claim 16, **characterized in that** the uplink receiving unit comprises:

    - uplink RF reception means (40-42) for receiving a radio frequency OFDM signal and for converting the received radio frequency OFDM signal into a baseband OFDM signal, and
    - uplink OFDM demodulation means (45, 46, 51, 52) for demodulating the baseband OFDM signal into a data signal,

wherein said uplink RF reception means and said uplink OFDM demodulation means have a bandwidth of $N_{u\_rx}$ times the sub-carrier distance ($f_\Delta$), wherein $N_{u\_rx}$ is equal to or larger than $N_{u\_tx}$.

**18.** Access point according claim 17, **characterized in that** the uplink OFDM demodulation means comprises:

    - uplink FFT means (45) for performing a $N_{u\_rx}$ - point Fast Fourier Transform operation on the baseband OFDM signal to obtain a frequency domain OFDM signal, the frequency domain OFDM signal comprising $N_{u\_rx}$ OFDM sub-carriers, and
- uplink decoding means (46, 51, 52) for deriving the data signal from the frequency domain OFDM signal.

**19.** Access point according to claim 18, **characterized in that** the uplink decoding means comprises:

- uplink reconstruction means (46) for reconstructing the sent $N_{u\_tx}$ OFDM sub-carriers from the received $N_{u\_rx}$ OFDM sub-carriers of the frequency domain OFDM signal,

wherein the $N_{u\_tx}$ frequency sub-carriers represent the radio frequency OFDM signal transmitted from the at least one terminal,

- uplink sub-carrier demapping means (51) for demapping the reconstructed $N_{u\_tx}$ frequency sub-carriers of the frequency domain OFDM signal onto complex valued channel coded symbols, and
- uplink symbol generation means (52) for demapping the complex valued channel coded symbols onto bits of the data signal.

**20.** Access point according to claim 19, **characterized in that** the uplink reconstruction means (26) is adapted for reconstructing the $N_{u\_tx}$ frequency sub-carriers from the $N_{u\_rx}$ frequency sub-carriers of the frequency domain OFDM signal by selecting essentially the $N_{u\_tx}/2$ first and the $N_{u\_tx}/2$ last sub-carriers of the frequency domain $N_{u\_rx}$ point OFDM signal.

**21.** Access point according to claim 20, **characterized in that** the uplink reconstruction means (46) is adapted for obtaining the information of the value of $N_{u\_tx}$ from an information included in the received radio frequency OFDM signal indicating said value or by analyzing the bandwidth of the received radio frequency OFDM signal.

**22.** Access point, in particular according to claim 16, for use in a communication system according to claim 2, comprising a downlink transmission unit (7) for transmitting radio frequency OFDM signals at a radio frequency for reception by the at least one terminal having a downlink receiving unit (11) for receiving said radio frequency OFDM signals, **characterized in that** the bandwidth of said downlink transmission unit is larger than the bandwidth of said downlink receiving unit and that the downlink transmission unit is adapted to generate and transmit radio frequency OFDM signals having a bandwidth that is smaller than the bandwidth of the downlink transmission unit and that is equal to the bandwidth of the downlink receiving unit.

**23.** Access point according to claim 22, **characterized in that** the downlink transmission unit (7) comprises:

- downlink OFDM modulation means (70, 71, 73, 74) for converting an input data signal into a baseband OFDM signal having $N_{d\_tx}$ frequency sub-carriers spaced at a sub-carrier distance ($f_\Delta$), using $N_{d\_rx}$ of said $N_{d\_tx}$ frequency sub-carriers for modulation of the input data signal, $N_{d\_rx}$ being equal to or smaller than $N_{d\_tx}$, and
- downlink RF transmission means (78) for converting the baseband OFDM signal into the radio frequency OFDM signal and for transmitting said radio frequency OFDM signal having a bandwidth of $N_{d\_tx}$ times the sub-carrier distance ($f_\Delta$),

wherein said downlink OFDM modulation means and said downlink RF transmission means have a bandwidth of $N_{d\_tx}$ times the sub-carrier distance ($f_\Delta$).

**24.** Access point according claim 23, **characterized in that** the downlink OFDM modulation means comprises:

- downlink coding means (70, 71, 73) for deriving a frequency domain OFDM source signal from the input data signal, the frequency domain OFDM source signal comprising $N_{d\_rx}$ OFDM sub-carriers, $N_{d\_rx}$ times the sub-carrier distance ($f_\Delta$) being the bandwidth of the at least one terminal, and
- downlink IFFT means (44) for performing a $N_{d\_tx}$ - point Inverse Fast Fourier Transform operation on the frequency domain OFDM source signal to obtain the baseband OFDM signal.

**25.** Access point according to claim 23, **characterized in that** the downlink coding means comprises:

- downlink symbol generation means (70) for mapping bits of the input data signal onto complex valued Channel encoded symbols,

- downlink sub-carrier mapping means (71) for mapping the complex valued Channel encoded symbols onto $N_{d\_rx}$ OFDM sub-carriers to obtain the frequency domain OFDM source signal, and
- downlink construction means (73) for obtaining $N_{d\_tx}$ frequency sub-carriers from the $N_{d\_rx}$ frequency sub-carriers of the frequency domain OFDM signal.

26. Access point according to claim 25, **characterized in that** the downlink construction means (73) is adapted for mapping essentially the $N_{d\_rx}/2$ first sub-carriers onto the $N_{d\_rx}/2$ first sub-carriers and the $N_{d\_rx}/2$ last sub-carriers onto the $N_{d\_rx}/2$ last sub-carriers of the frequency domain $N_{d\_tx}$ point OFDM signal and by setting the remaining $N_{d\_tx} - N_{d\_rx}$ unused sub-carriers to zero.

27. Access point according to claims 16 and 22, **characterized in that** the uplink receiving unit (4) and the downlink transmission unit (7) of the access point are adapted for receiving and transmitting, respectively, of radio frequency OFDM signals having different bandwidths.

28. Access point according to claims 16, **characterized in that** the uplink receiving unit (4A) comprises:

- first uplink decoding means (43, 47 to 52) for deriving a first data signal from the frequency domain OFDM signal received from a terminal of a first communication system and
- second uplink decoding means (53, 54) for deriving a second data signal from the frequency domain OFDM signal received from a terminal of a second communication system different from the first communication system.

29. Access point according to claims 22, **characterized in that** the downlink transmission unit (7B) comprises:

- first downlink coding means (70 to 72) for deriving a first frequency domain OFDM source signal from the data signal for transmission to a terminal of a first communication system and
- second downlink coding means (81) for deriving a second frequency domain OFDM source signal from the data signal for transmission to a terminal of a second communication system different from the first communication system.

30. Access point according to claims 16 and 22, **characterized in that** the downlink transmission unit (7) comprises indicator transmission means (78) for transmitting an indicator signal, in particular a continuous cosine waveform having a frequency close to a DC sub-carrier, indicating the presence or absence of a second communication system, in particular a legacy OFDM communication system, for reception and evaluation by the downlink receiving unit (11) comprising indicator receiving means (110) for receiving and evaluating said indicator signal.

## FIG.1

Data Source → Channel Encoder & Interleaver (10) → A1 → Sub-carrier Mapper (11) → B1 → $N_{u\_tx}$ point IFFT (12) → GP Inserter (13)

RF Frontend (BW=$N_{u\_tx}f_\Delta$) (16) ← DAC (15) ← Power Shaping LPF (BW=$N_{u\_tx}f_\Delta$) (14)

## FIG.2

$a\_1(k)$  $a\_3(k)$  $a\_5(k)$  $a\_7(k)$  $a\_9(k)$  MT transmitter based

0  $N_{u\_tx}$-1  FFT index

$a\_2(k)$  $a\_4(k)$  $a\_6(k)$  $a\_8(k)$  $a\_10(k)$

## FIG.3

Cyclic prefix with $N_{u\_tx\_gp}$ sampling points

Original time domain OFDM symbol with $N_{u\_tx}$ sampling points

Time index

FIG.4

EP 1 876 729 A1

GP with
with $N_{u\_rx\_gp}$
sampling
points

Original time domain OFDM symbol
with $N_{u\_rx}$ sampling points

Time index

⇩ GP Remover

Original time domain OFDM symbol
with $N_{u\_rx}$ sampling points

Time index

# FIG.5

AP receiver based
FFT Index

$0 \quad N_{u\_tx}/2-1 \quad N_{u\_rx}-N_{u\_tx}/2 \quad N_{u\_rx}-1$

$0 \quad N_{u\_tx}-1$

MT transmitter based
FFT Index

# FIG.6

EP 1 876 729 A1

7

Data Source for MT → | Channel Encoder & Interleaver | →A7→ | Sub-carrier Mapper | →B7→ | Power-Shaping LPF $(BW=N_{d\_tx}f_\Delta)$ | →C7→ | Index Shifter |

70    71    72    73

7'

RF Frontend $(BW=N_{d\_tx}f_\Delta)$ ← DAC ← Power-Shaping LPF $(BW=N_{d\_tx}f_\Delta)$ ← GP Inserter ← $N_{d\_tx}$ point IFFT ← F7$_{AP}$

78    77    76    75    74

FIG.7

a_1(k)   a_3(k)   a_5(k)     a_7(k)   a_9(k)

0                         $N_{d\_tx}$ -1

a_2(k)   a_4(k)     a_6(k)   a_8(k)   a_10(k)     MT receiver based FFT index

# FIG.8

Power-Shaping LPF

a_5(k)

a_1(k)   a_3(k)           a_7(k)   a_9(k)

0                         $N_{d\_tx}$ -1

a_2(k)   a_4(k)     a_6(k)   a_8(k)   a_10(k)     MT receiver based FFT index

# FIG.9

0                         MT transmitter based FFT Index

$N_{d\_tx}$ -1

0    $N_{d\_tx}/2$-1          $N_{d\_rx}$ -$N_{d\_tx}/2$     $N_{d\_rx}$ -1

AP receiver based FFT Index

# FIG.10

FIG.11

GP with
with $N_{d\_rx\_gp}$
sampling
points

Original time domain OFDM symbol
with $N_{d\_rx\_gp}$ sampling points

Time index

⇩ GP Remover

Original time domain OFDM symbol
with $N_{rx}$ sampling points

Time index

## FIG.12

Bandwidth
Class $k_{min}$

⋮ ⋮

Bandwidth Class $k_{max}$-1

Bandwidth Class $k_{max}$

-N $f_\Delta$/2

N $f_\Delta$/2-1

Frequency

## FIG.13

FIG.14A

Pr_3(1)|Pr_3(2)|Pr_3(3)|Pr_3(4)|Pr_3(5)|Pr_3(6)|Pr_3(7)|Pr_3(8)|Pr_3(9)|Pr_3(10)|Pr_3(11)|Pr_3(12)

0  4  8  12  19  23  27  35  39  43  48  53  58  63

Sub-carrier Index

FIG.14B

Pr_3(1)|Pr_3(2)|Pr_3(3)|Pr_3(4)|Pr_3(5)|Pr_3(6)

0  4  8  12  19  23  27  31

Sub-carrier Index

FIG.14C

Pr_3(1)|Pr_3(2)|Pr_3(3)

0  4  8  12  15

Sub-carrier Index

FIG.15

Data Source for MT

7A

7'

Channel Encoder & Interleaver — 70

A7

Sub-carrier Mapper — 71

B7

Power Shaping LPF $(BW=N_{d\_tx}f_\Delta)$ — 72

C7

Index Shifter — 73

$N_{d\_tx}$point IFFT — 74

F7AP

GP Inserter — 75

Time Domain Preamble Generator — 79

80

Power Shaping LPF $(BW=N_{d\_tx}f_\Delta)$ — 76

DAC — 77

RF Frontend $(BW=N_{d\_tx}f_\Delta)$ — 78

FIG.16

EP 1 876 729 A1

**4A**

54 — Legacy Uplink Receiver Baseband Subsystem

53 — Match Filter

40 — RF Frontend (BW=$N_{u\_rx}f_\Delta$)

41 — ADC

42 — Digital LPF (BW=$N_{u\_rx}f_\Delta$)

44 — GP Remover

45 — $N_{u\_rx}$point FFT    $F4_{AP}$

46 — Windowing & Mixing    $E4_{MT}$

43 — Time-Domain Frequency/Phase/Timing Offsets Estimator

47 — Time-Domain Frequency/Phase/Timing Offsets Estimator

B4 — Data Detector    C4

Channel Equalizer    D4

Frequency/Phase/Timing Offsets Compensator

50    49    48

51 — Sub-carrier Demapper    A4

52 — Channel Decoder & Deinterleaver    Data Sink

FIG.17

7B

Legacy Downlink Transmitter
Baseband Subsystem — 81

7'

Data
Source for
MT

Channel
Encoder
&
Interleaver
70

A7

Sub-carrier
Mapper
71

B7

Power-Shaping
LPF
(BW=$N_{d\_tx}f_\Delta$)
72

C7

Index
Shifter
73

RF Frontend
(BW=$N_{d\_tx}f_\Delta$)
78

DAC
77

Power-Shaping
LPF
(BW=$N_{d\_tx}f_\Delta$)
76

GP
Inserter
75

$N_{d\_tx}$point
IFFT
74

F7$_{AP}$

FIG.18

EP 1 876 729 A1

4B

55 ─ Legacy Uplink Receiver Baseband Subsystem

40

RF Frontend $(BW=N_{u\_rx}f_\Delta)$

41

ADC

42

Digital LPF $(BW=N_{u\_rx}f_\Delta)$

44

GP Remover

45

$N_{u\_rx}$point FFT

$F4_{AP}$

46

Windowing & Mixing

$E4_{MT}$

43

Time-Domain Frequency/Phase/Timing Offsets Estimator

47

Time-Domain Frequency/Phase/Timing Offsets Estimator

B4

Data Detector

C4

Channel Equalizer

D4

Frequency/Phase/Timing Offsets Compensator

48

50

49

51

Sub-carrier

A4

52

Channel Decoder & Deinterleaver

Data Sink

FIG.19

FIG.20

**European Patent Office**

# EUROPEAN SEARCH REPORT

Application Number

EP 06 11 6631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 622 295 A (DISENO DE SISTEMAS EN SILICIO S.A) 1 February 2006 (2006-02-01) <br><br> * paragraphs [0005] - [0013]; claim 1 * <br> ----- | 1,2,6,8, 12,16, 22,27 | INV. <br> H04B7/26 |
| A | EP 0 869 647 A (LUCENT TECHNOLOGIES INC) 7 October 1998 (1998-10-07) <br> * page 3, line 15 - page 4, line 2 * <br> ----- | 1-30 | |
| A | US 2003/072256 A1 (KIM KWANG-CHUL) 17 April 2003 (2003-04-17) <br> * claim 1 * <br> ----- | 1-30 | |
| A | EP 0 760 564 A (TELIA AB) 5 March 1997 (1997-03-05) <br> * page 2, line 3 - line 38; claim 26 * <br> ----- | 1-30 | |

TECHNICAL FIELDS
SEARCHED (IPC)

H04B

The present search report has been drawn up for all claims

| Place of search | Date of completion of the search | Examiner |
|---|---|---|
| The Hague | 9 October 2006 | Bischof, Jean-Louis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 6631

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2006

| Patent document cited in search report | | | Publication date | Patent family member(s) | | | Publication date |
|---|---|---|---|---|---|---|---|
| EP 1622295 | A | | 01-02-2006 | AU | 2004237320 | A1 | 18-11-2004 |
| | | | | BR | PI0410006 | A | 25-04-2006 |
| | | | | CA | 2522992 | A1 | 18-11-2004 |
| | | | | CN | 1784847 | A | 07-06-2006 |
| | | | | ES | 2220208 | A1 | 01-12-2004 |
| | | | | WO | 2004100412 | A1 | 18-11-2004 |
| | | | | MX | PA05010780 | A | 12-12-2005 |
| | | | | US | 2006062318 | A1 | 23-03-2006 |
| EP 0869647 | A | | 07-10-1998 | DE | 69806670 | D1 | 29-08-2002 |
| | | | | DE | 69806670 | T2 | 27-02-2003 |
| | | | | JP | 3712522 | B2 | 02-11-2005 |
| | | | | JP | 10303849 | A | 13-11-1998 |
| | | | | US | 6175550 | B1 | 16-01-2001 |
| US 2003072256 | A1 | | 17-04-2003 | KR | 2003016121 | A | 26-02-2003 |
| EP 0760564 | A | | 05-03-1997 | DE | 69631625 | D1 | 01-04-2004 |
| | | | | DE | 69631625 | T2 | 03-02-2005 |
| | | | | DK | 760564 | T3 | 05-07-2004 |
| | | | | NO | 963489 | A | 03-03-1997 |
| | | | | SE | 515752 | C2 | 08-10-2001 |
| | | | | SE | 9502963 | A | 01-03-1997 |
| | | | | US | 5909436 | A | 01-06-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. HANZO ; M. MUENSTER ; B.J. CHOI ; T. KEL-LER.** OFDM and MC-CDMA for Broadband Multi-User Communications, WLANs and Broadcasting. John Wiley & Sons, June 2004